# EUROPEAN PATENT SPECIFICATION

(11) **EP 2 761 860 B1**
(45) Date of publication and mention of the grant of the patent: **23.10.2019**
(21) Application number: 12770373.4
(22) Date of filing: 20.09.2012
(51) Int. Cl.: H04M 1/725

(54) **AUTOMATICALLY ADAPTING USER INTERFACES FOR HANDS-FREE INTERACTION**
AUTOMATISCHE ANPASSUNG VON BENUTZEROBERFLÄCHEN FÜR FREIHÄNDIGE INTERAKTION
INTERFACES UTILISATEUR S'ADAPTANT AUTOMATIQUEMENT POUR PERMETTRE UNE INTERACTION SANS LES MAINS

(30) Priority: 30.09.2011 US 201113250947
(43) Date of publication of application: 06.08.2014
(73) Proprietor: Apple Inc., Cupertino CA 95014 (US)
(72) Inventor: GRUBER, Thomas, Robert, Cupertino, CA 95014 (US); SADDLER, Harry, J., Cupertino, CA 95014 (US)
(74) Representative: COPA Copenhagen Patents
(86) International application number: PCT/US2012/056382
(87) International publication number: WO 2013/048880

(56) References cited:
- WO-A2-2011/088053
- US-A1- 2009 150 156
- US-A1- 2011 195 758
- Car Working Group: "BLUETOOTH DOC HANDS-FREE PROFILE 1.5 HFP1.5_SPEC", , 25 November 2005 (2005-11-25), XP055047100, Retrieved from the Internet: URL:www.bluetooth.org [retrieved on 2012-12-07]

## Description

### FIELD OF THE INVENTION

The present invention relates to multimodal user interfaces, and more specifically to user interfaces that include both voice-based and visual modalities.

### BACKGROUND OF THE INVENTION

Many existing operating systems and devices use voice input as a modality by which the user can control operation. One example is voice command systems, which map specific verbal commands to operations, for example to initiate dialing of a telephone number by speaking the person's name. Another example is Interactive Voice Response (IVR) systems, which allow people to access static information over the telephone, such as automated telephone service desks.

Many voice command and IVR systems are relatively narrow in scope and can only handle a predefined set of voice commands. In addition, their output is often drawn from a fixed set of responses.

An intelligent automated assistant, also referred to herein as a virtual assistant, is able to provide an improved interface between human and computer, including the processing of natural language input. Such an assistant, which may be implemented as described in related U.S. Utility Application US2013185081 for "Intelligent Automated Assistant", filed January 10, 2011 and WO2011088053, published July 21, 2011, allows users to interact with a device or system using natural language, in spoken and/or text forms. Such an assistant interprets user inputs, operationalizes the user's in-tent into tasks and parameters to those tasks, executes services to support those tasks, and produces output that is intelligible to the user.

Virtual assistants are capable of using general speech and natural language understanding technology to recognize a greater range of input, enabling generation of a dialog with the user. Some virtual assistants can generate output in a combination of modes, including verbal responses and written text, and can also provide a graphical user interface (GUI) that permits direct manipulation of on-screen elements. However, the user may not always be in a situation where he or she can take advantage of such visual output or direct manipulation interfaces. For example, the user may be driving or operating machinery, or may have a sight disability, or may simply be uncomfortable or unfamiliar with the visual interface.

Any situation in which a user has limited or no ability to read a screen or interact with a device via contact (including using a keyboard, mouse, touch screen, pointing device, and the like) is referred to herein as a "hands-free context". For example, in situations where the user is attempting to operate a device while driving, as mentioned above, the user can hear audible output and respond using their voice, but for safety reasons should not read fine print, tap on menus, or enter text.

Hands-free contexts present special challenges to the builders of complex systems such as virtual assistants. Users demand full access to features of devices whether or not they are in a hands-free context. However, failure to account for particular limitations inherent in hands-free operation can result in situations that limit both the utility and the usability of a device or system, and can even compromise safety by causing a user to be distracted from a primary task such as operating a vehicle.

US 2011/0195758 discloses a mobile device or system comprises processing circuitry configured to operate in both a first mode and a second mode. The processing circuit receives instructions from a user by detecting the user touching the device or an accessory of the device when in the first mode and receives instructions from the voice of the user through the voice sensor when in the second mode. When a predetermined requirement is met, the processing circuit is configured to switch from a first mode to a second mode without receiving specific instructions from the user to switch the mode at the time of switching.

### SUMMARY

According to various embodiments of the present invention, a user interface for a system such as a virtual assistant is automatically adapted for hands-free use. A hands-free context is detected via automatic or manual means, and the system adapts various stages of a complex interactive system to modify the user experience to reflect the particular limitations of such a context. The system of the present invention thus allows for a single implementation of a virtual assistant or other complex system to dynamically offer user interface elements and to alter user interface behavior to allow hands-free use without compromising the user experience of the same system for hands-on use.

For example, in various embodiments, the system of the present invention provides mechanisms for adjusting the operation of a virtual assistant so that it provides output in a manner that allows users to complete their tasks without having to read details on a screen. Furthermore, in various embodiments, the virtual assistant can provide mechanisms for receiving spoken input as an alternative to reading, tapping, clicking, typing, or performing other functions often achieved using a graphical user interface.

In various embodiments, the system of the present invention provides underlying functionality that is identical to (or that approximates) that of a conventional graphical user interface, while allowing for the particular requirements and limitations associated with a hands-free context. More generally, the system of the present invention allows core functionality to remain substantially the same, while facilitating operation in a hands-free context. In some embodiments, systems built according to the techniques of the present invention allow users to freely choose between hands-free mode and conventional ("hands-on") mode, in some cases within a single session. For example, the same interface can be made adaptable to both an office environment and a moving vehicle, with the system dynamically making the necessary changes to user interface behavior as the environment changes.

According to various embodiments of the present invention, any of a number of mechanisms can be implemented for adapting operation of a virtual assistant to a hands-free context. In various embodiments, the virtual assistant is an intelligent automated assistant as described in U.S. Utility Application US2013185081 for "Intelligent Automated Assistant", filed January 10, 2011. Such an assistant engages with the user in an integrated, conversational manner using natural language dialog, and invokes external services when appropriate to obtain information or perform various actions.

According to various embodiments of the present invention, a virtual assistant may be configured, designed, and/or operable to detect a hands-free context and to adjust its operation accordingly in performing various different types of operations, functionalities, and/or features, and/or to combine a plurality of features, operations, and applications of an electronic device on which it is installed. In some embodiments, a virtual assistant of the present invention can detect a hands-free context and adjust its operation accordingly when receiving input, providing output, engaging in dialog with the user, and/or performing (or initiating) actions based on discerned intent.

Actions can be performed, for example, by activating and/or interfacing with any applications or services that may be available on an electronic device, as well as services that are available over an electronic network such as the Internet. In various embodiments, such activation of external services can be performed via application programming interfaces (APIs) or by any other suitable mechanism(s). In this manner, a virtual assistant implemented according to various embodiments of the present invention can provide a hands-free usage environment for many different applications and functions of an electronic device, and with respect to services that may be available over the Internet. As described in the above-referenced related application, the use of such a virtual assistant can relieve the user of the burden of learning what functionality may be available on the device and on web-connected services, how to interface with such services to get what he or she wants, and how to interpret the output received from such services; rather, the assistant of the present invention can act as a go-between between the user and such diverse services.

In addition, in various embodiments, the virtual assistant of the present invention provides a conversational interface that the user may find more intuitive and less burdensome than conventional graphical user interfaces. The user can engage in a form of conversational dialog with the assistant using any of a number of available input and output mechanisms, depending in part on whether a hands-free or hands-on context is active. Examples of such input and output mechanisms include, without limitation, speech, graphical user interfaces (buttons and links), text entry, and the like. The system can be implemented using any of a number of different platforms, such as device APIs, the web, email, and the like, or any combination thereof. Requests for additional input can be presented to the user in the context of a conversation presented in an auditory and/or visual manner. Short and long term memory can be engaged so that user input can be interpreted in proper context given previous events and communications within a given session, as well as historical and profile information about the user.

In various embodiments, the virtual assistant of the present invention can control various features and operations of an electronic device. For example, the virtual assistant can call services that interface with functionality and applications on a device via APIs or by other means, to perform functions and operations that might otherwise be initiated using a conventional user interface on the device. Such functions and operations may include, for example, setting an alarm, making a telephone call, sending a text message or email message, adding a calendar event, and the like. Such functions and operations may be performed as add-on functions in the context of a conversational dialog between a user and the assistant. Such functions and operations can be specified by the user in the context of such a dialog, or they may be automatically performed based on the context of the dialog. One skilled in the art will recognize that the assistant can thereby be used as a mechanism for initiating and controlling various operations on the electronic device. By collecting contextual evidence that contributes to inferences about the user's current situation, and by adjusting operation of the user interface accordingly, the system of the present invention is able to present mechanisms for enabling hands-free operation of a virtual assistant to implement such a mechanism for controlling the device.

In accordance with some embodiments, a method includes, at a processor, detecting whether or not a hands-free context is active. The method also includes, at an output device, prompting a user for input. The method also includes, at an input device, receiving user input. The method also includes, at the processor, interpreting the received user input to derive a representation of user intent; identifying at least one task and at least one parameter for the task, based at least in part on the derived representation of user intent; executing the at least one task using the at least one parameter, to derive a result; generating a dialog response based on the derived result. The method also includes, at the output device, outputting the generated dialog response. Responsive to detection that the device is in a hands-free context, at least one of the steps of prompting the user for input, receiving user input, interpreting the receiving user input, identifying the at least one task and at least one parameter for the task, and generating the dialog response is performed in a manner consistent with limitations associated with the hands-free context.

In accordance with some embodiments, an electronic device includes one or more processors, memory, and one or more programs; the one or more programs are stored in the memory and configured to be executed by the one or more processors and the one or more programs include instructions for performing the operations of any of the methods described above. In accordance with some embodiments, a computer readable storage medium has stored therein instructions, which, when executed by an electronic device, cause the device to perform the operations of any of the methods described above. In accordance with some embodiments, an electronic device includes means for performing the operations of any of the methods described above. In accordance with some embodiments, an information processing apparatus, for use in an electronic device includes means for performing the operations of any of the methods described above.

In accordance with some embodiments, an electronic device includes a processing unit configured to detect whether or not a hands-free context is active. The electronic device also includes an output unit coupled to the processing unit and configured to prompt a user for input, and an input unit coupled to the processing unit and configured to receive user input The processing unit is further configured to: interpret the received user input to derive a representation of user intent; identify at least one task and at least one parameter for the task, based at least in part on the derived representation of user in-tent; execute the at least one task using the at least one parameter, to derive a result; generate a dialog response based on the derived result; and cause the output device to output the generated dialog response. Responsive to detection that the device is in a hands-free context, at least one of the steps of prompting the user for input, receiving user input, interpreting the receiving user input, identifying the at least one task and at least one parameter for the task, and generating the dialog response is performed in a manner consistent with limitations associated with the hands-free context.

### BRIEF DESCRIPTION OF THE DRAWINGS

The accompanying drawings illustrate several embodiments of the invention and, together with the description, serve to explain the principles of the invention according to the embodiments. One skilled in the art will recognize that the particular embodiments illustrated in the drawings are merely exemplary, and are not intended to limit the scope of the present invention.
Fig. 1 is a screen shot illustrating an example of a hands-on interface for reading a text message, according to the prior art.
Fig. 2 is a screen shot illustrating an example of an interface for responding to a text message.
Figs. 3A and 3B are a sequence of screen shots illustrating an example wherein a voice dictation interface is used to reply to a text message.
Fig. 4 is a screen shot illustrating an example of an interface for receiving a text message, according to one embodiment.
Figs. 5A through 5D are a series of screen shots illustrating an example of operation of a multimodal virtual assistant according to an embodiment of the present invention, wherein the user receives and replies to a text message in a hands-free context.
Figs. 6A through 6C are a series of screen shots illustrating an example of operation of a multimodal virtual assistant according to an embodiment of the present invention, wherein the user revises a text message in a hands-free context.
Fig. 7 is a flow diagram depicting a method of operation of a virtual assistant that supports dynamic detection of and adaptation to a hands-free context, according to one embodiment.
Fig. 8 is a block diagram depicting an example of a virtual assistant system according to one embodiment.
Fig. 9 is a block diagram depicting a computing device suitable for implementing at least a portion of a virtual assistant according to at least one embodiment.
Fig. 10 is a block diagram depicting an architecture for implementing at least a portion of a virtual assistant on a standalone computing system, according to at least one embodiment.
Fig. 11 is a block diagram depicting an architecture for implementing at least a portion of a virtual assistant on a distributed computing network, according to at least one embodiment.
Fig. 12 is a block diagram depicting a system architecture illustrating several different types of clients and modes of operation.
Fig. 13 is a block diagram depicting a client and a server, which communicate with each other to implement the present invention according to one embodiment.
Fig. 14 is a functional block diagram of an electronic device in accordance with some embodiments.

### DETAILED DESCRIPTION OF THE EMBODIMENTS

According to various embodiments of the present invention, a hands-free context is detected in connection with operations of a virtual assistant, and the user interface of the virtual assistant is adjusted accordingly, so as to enable the user to interact with the assistant meaningfully in the hands-free context.

For purposes of the description, the term "virtual assistant" is equivalent to the term "intelligent automated assistant", both referring to any information processing system that performs one or more of the functions of:
- interpreting human language input, in spoken and/or text form;
- operationalizing a representation of user intent into a form that can be executed, such as a representation of a task with steps and/or parameters;
- executing task representations, by invoking programs, methods, services, APIs, or the like; and
- generating output responses to the user in language and/or graphical form.

An example of such a virtual assistant is described in related U.S. Utility Application US201318508 for "Intelligent Automated Assistant", filed January 10, 2011.

Various techniques will now be described in detail with reference to example embodiments as illustrated in the accompanying drawings. In the following description, numerous specific details are set forth in order to provide a thorough understanding of one or more aspects and/or features described or reference herein. It will be apparent, however, to one skilled in the art, that one or more aspects and/or features described or reference herein may be practiced without some or all of these specific details. In other instances, well known process steps and/or structures have not been described in detail in order to not obscure some of the aspects and/or features described or reference herein.

One or more different inventions may be described in the present application. Further, for one or more of the invention(s) described herein, numerous embodiments may be described in this patent application, and are presented for illustrative purposes only.. One or more of the invention(s) may be widely applicable to numerous embodiments, as is readily apparent from the disclosure. These embodiments are described in sufficient detail to enable those skilled in the art to practice one or more of the invention(s), and it is to be understood that other embodiments may be utilized and that structural, logical, software, electrical and other changes may be made without departing from the scope of the one or more of the invention(s). Accordingly, those skilled in the art will recognize that the one or more of the invention(s) may be practiced with various modifications and alterations. Particular features of one or more of the invention(s) may be described with reference to one or more particular embodiments or figures that form a part of the present disclosure, and in which are shown, by way of illustration, specific embodiments of one or more of the invention(s). It should be understood, however, that such features are not limited to usage in the one or more particular embodiments or figures with reference to which they are described. The present disclosure is neither a literal description of all embodiments of one or more of the invention(s) nor a listing of features of one or more of the invention(s) that must be present in all embodiments.

Headings of sections provided in this patent application and the title of this patent application are for convenience.

Devices that are in communication with each other need not be in continuous communication with each other, unless expressly specified otherwise. In addition, devices that are in communication with each other may communicate directly or indirectly through one or more intermediaries.

A description of an embodiment with several components in communication with each other does not imply that all such components are required. To the contrary, a variety of optional components are described to illustrate the wide variety of possible embodiments of one or more of the invention(s).

Further, although process steps, method steps, algorithms or the like may be described in a sequential order, such processes, methods and algorithms may be configured to work in any suitable order. In other words, any sequence or order of steps that may be described in this patent application does not, in and of itself, indicate a requirement that the steps be performed in that order. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the invention(s), and does not imply that the illustrated process is preferred.

When a single device or article is described, it will be readily apparent that more than one device/article (whether or not they cooperate) may be used in place of a single device/article. Similarly, where more than one device or article is described (whether or not they cooperate), it will be readily apparent that a single device/article may be used in place of the more than one device or article.

The functionality and/or the features of a device may be alternatively embodied by one or more other devices that are not explicitly described as having such functionality/features. Thus, other embodiments of one or more of the invention(s) need not include the device itself.

Techniques and mechanisms described or reference herein will sometimes be described in singular form for clarity. However, it should be noted that particular embodiments include multiple iterations of a technique or multiple instantiations of a mechanism unless noted otherwise.

Although described within the context of technology for implementing an intelligent automated assistant, also known as a virtual assistant, it may be understood that the various aspects and techniques described herein may also be deployed and/or applied in other fields of technology involving human and/or computerized interaction with software.

Other disclosures relating to virtual assistant technology (e.g., which may be utilized by, provided by, and/or implemented at one or more virtual assistant system embodiments described herein) are disclosed in one or more of the following:
- U.S. Utility Application US2013185081 for "Intelligent Automated Assistant", filed January 10, 2011;
- U.S. Utility Application US20120265528, entitled "Using Context Information to Facilitate Processing of Commands in a Virtual Assistant", filed September 30, 2011;
- U.S. Patent Application US2007100790 for "Method And Apparatus for Building an Intelligent Automated Assistant", filed September 8, 2006;

### Hardware Architecture

Generally, the virtual assistant techniques disclosed herein may be implemented on hardware or a combination of software and hardware. For example, they may be implemented in an operating system kernel, in a separate user process, in a library package bound into network applications, on a specially constructed machine, and/or on a network interface card. In a specific embodiment, the techniques disclosed herein may be implemented in software such as an operating system or in an application running on an operating system.

Software/hardware hybrid implementation(s) of at least some of the virtual assistant embodiment(s) disclosed herein may be implemented on a programmable machine selectively activated or reconfigured by a computer program stored in memory. Such network devices may have multiple network interfaces which may be configured or designed to utilize different types of network communication protocols. A general architecture for some of these machines may appear from the descriptions disclosed herein. According to specific embodiments, at least some of the features and/or functionalities of the various virtual assistant embodiments disclosed herein may be implemented on one or more general-purpose network host machines such as an end-user computer system, computer, network server or server system, mobile computing device (e.g., personal digital assistant, mobile phone, smartphone, laptop, tablet computer, or the like), consumer electronic device, music player, or any other suitable electronic device, router, switch, or the like, or any combination thereof. In at least some embodiments, at least some of the features and/or functionalities of the various virtual assistant embodiments disclosed herein may be implemented in one or more virtualized computing environments (e.g., network computing clouds, or the like).

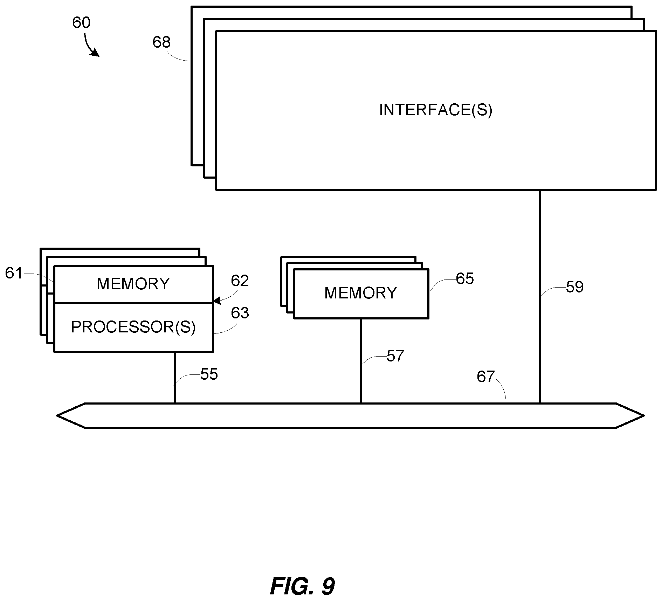

Referring now to Fig. 9, there is shown a block diagram depicting a computing device 60 suitable for implementing at least a portion of the virtual assistant features and/or functionalities disclosed herein. Computing device 60 may be, for example, an end-user computer system, network server or server system, mobile computing device (e.g., personal digital assistant, mobile phone, smartphone, laptop, tablet computer, or the like), consumer electronic device, music player, or any other suitable electronic device, or any combination or portion thereof. Computing device 60 may be adapted to communicate with other computing devices, such as clients and/or servers, over a communications network such as the Internet, using known protocols for such communication, whether wireless or wired.

In one embodiment, computing device 60 includes central processing unit (CPU) 62, interfaces 68, and a bus 67 (such as a peripheral component interconnect (PCI) bus). When acting under the control of appropriate software or firmware, CPU 62 may be responsible for implementing specific functions associated with the functions of a specifically configured computing device or machine. For example, in at least one embodiment, a user's personal digital assistant (PDA) or smartphone may be configured or designed to function as a virtual assistant system utilizing CPU 62, memory 61, 65, and interface(s) 68. In at least one embodiment, the CPU 62 may be caused to perform one or more of the different types of virtual assistant functions and/or operations under the control of software modules/components, which for example, may include an operating system and any appropriate applications software, drivers, and the like.

CPU 62 may include one or more processor(s) 63 such as, for example, a processor from the Motorola or Intel family of microprocessors or the MIPS family of microprocessors. In some embodiments, processor(s) 63 may include specially designed hardware (e.g., application-specific integrated circuits (ASICs), electrically erasable programmable read-only memories (EEPROMs), field-programmable gate arrays (FPGAs), and the like) for controlling the operations of computing device 60. In a specific embodiment, a memory 61 (such as non-volatile random access memory (RAM) and/or read-only memory (ROM)) also forms part of CPU 62. However, there are many different ways in which memory may be coupled to the system. Memory block 61 may be used for a variety of purposes such as, for example, caching and/or storing data, programming instructions, and the like.

As used herein, the term "processor" is not limited merely to those integrated circuits referred to in the art as a processor, but broadly refers to a microcontroller, a microcomputer, a programmable logic controller, an application-specific integrated circuit, and any other programmable circuit.

In one embodiment, interfaces 68 are provided as interface cards (sometimes referred to as "line cards"). Generally, they control the sending and receiving of data packets over a computing network and sometimes support other peripherals used with computing device 60. Among the interfaces that may be provided are Ethernet interfaces, frame relay interfaces, cable interfaces, DSL interfaces, token ring interfaces, and the like. In addition, various types of interfaces may be provided such as, for example, universal serial bus (USB), Serial, Ethernet, Firewire, PCI, parallel, radio frequency (RF), Bluetooth™, near-field communications (e.g., using near-field magnetics), 802.11 (WiFi), frame relay, TCP/IP, ISDN, fast Ethernet interfaces, Gigabit Ethernet interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces 68 may include ports appropriate for communication with the appropriate media. In some cases, they may also include an independent processor and, in some instances, volatile and/or non-volatile memory (e.g., RAM).

Although the system shown in Fig. 9 illustrates one specific architecture for a computing device 60 for implementing the techniques of the invention described herein, it is by no means the only device architecture on which at least a portion of the features and techniques described herein may be implemented. For example, architectures having one or any number of processors 63 can be used, and such processors 63 can be present in a single device or distributed among any number of devices. In one embodiment, a single processor 63 handles communications as well as routing computations. In various embodiments, different types of virtual assistant features and/or functionalities may be implemented in a virtual assistant system which includes a client device (such as a personal digital assistant or smartphone running client software) and server system(s) (such as a server system described in more detail below).

Regardless of network device configuration, the system of the present invention may employ one or more memories or memory modules (such as, for example, memory block 65) configured to store data, program instructions for the general-purpose network operations and/or other information relating to the functionality of the virtual assistant techniques described herein. The program instructions may control the operation of an operating system and/or one or more applications, for example. The memory or memories may also be configured to store data structures, keyword taxonomy information, advertisement information, user click and impression information, and/or other specific non-program information described herein.

Because such information and program instructions may be employed to implement the systems/methods described herein, at least some network device embodiments may include nontransitory machine-readable storage media, which, for example, may be configured or designed to store program instructions, state information, and the like for performing various operations described herein. Examples of such nontransitory machine-readable storage media include, but are not limited to, magnetic media such as hard disks, floppy disks, and magnetic tape; optical media such as CD-ROM disks; magneto-optical media such as floptical disks, and hardware devices that are specially configured to store and perform program instructions, such as read-only memory devices (ROM), flash memory, memristor memory, random access memory (RAM), and the like. Examples of program instructions include both machine code, such as produced by a compiler, and files containing higher level code that may be executed by the computer using an interpreter.

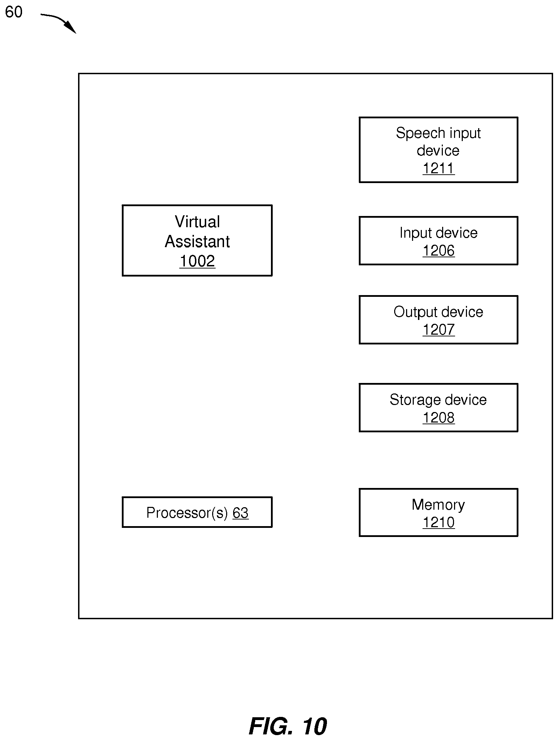

In one embodiment, the system of the present invention is implemented on a standalone computing system. Referring now to Fig. 10, there is shown a block diagram depicting an architecture for implementing at least a portion of a virtual assistant on a standalone computing system, according to at least one embodiment. Computing device 60 includes processor(s) 63 which run software for implementing multimodal virtual assistant 1002. Input device 1206 can be of any type suitable for receiving user input, including for example a keyboard, touchscreen, mouse, touchpad, trackball, five-way switch, joystick, and/or any combination thereof. Device 60 can also include speech input device 1211, such as for example a microphone. Output device 1207 can be a screen, speaker, printer, and/or any combination thereof. Memory 1210 can be random-access memory having a structure and architecture as are known in the art, for use by processor(s) 63 in the course of running software. Storage device 1208 can be any magnetic, optical, and/or electrical storage device for storage of data in digital form; examples include flash memory, magnetic hard drive, CD-ROM, and/or the like.

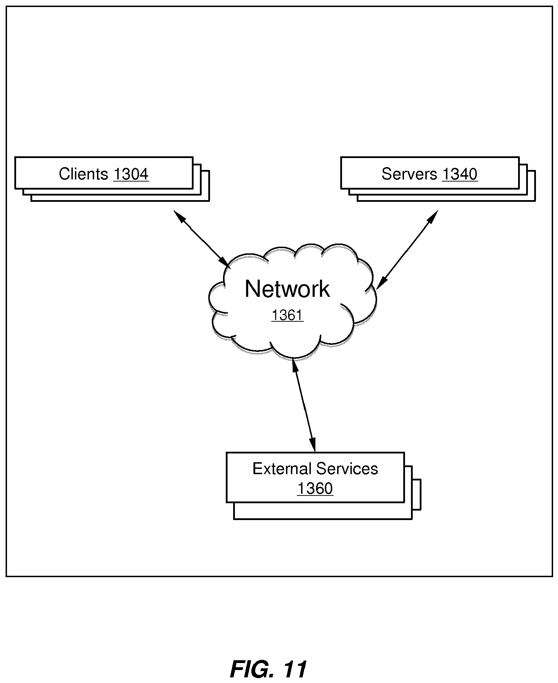

In another embodiment, the system of the present invention is implemented on a distributed computing network, such as one having any number of clients and/or servers. Referring now to Fig. 11, there is shown a block diagram depicting an architecture for implementing at least a portion of a virtual assistant on a distributed computing network, according to at least one embodiment.

In the arrangement shown in Fig. 11, any number of clients 1304 are provided; each client 1304 may run software for implementing client-side portions of the present invention. In addition, any number of servers 1340 can be provided for handling requests received from clients 1304. Clients 1304 and servers 1340 can communicate with one another via electronic network 1361, such as the Internet. Network 1361 may be implemented using any known network protocols, including for example wired and/or wireless protocols.

In addition, in one embodiment, servers 1340 can call external services 1360 when needed to obtain additional information or refer to store data concerning previous interactions with particular users. Communications with external services 1360 can take place, for example, via network 1361. In various embodiments, external services 1360 include web-enabled services and/or functionality related to or installed on the hardware device itself. For example, in an embodiment where assistant 1002 is implemented on a smartphone or other electronic device, assistant 1002 can obtain information stored in a calendar application ("app"), contacts, and/or other sources.

In various embodiments, assistant 1002 can control many features and operations of an electronic device on which it is installed. For example, assistant 1002 can call external services 1360 that interface with functionality and applications on a device via APIs or by other means, to perform functions and operations that might otherwise be initiated using a conventional user interface on the device. Such functions and operations may include, for example, setting an alarm, making a telephone call, sending a text message or email message, adding a calendar event, and the like. Such functions and operations may be performed as add-on functions in the context of a conversational dialog between a user and assistant 1002. Such functions and operations can be specified by the user in the context of such a dialog, or they may be automatically performed based on the context of the dialog. One skilled in the art will recognize that assistant 1002 can thereby be used as a control mechanism for initiating and controlling various operations on the electronic device, which may be used as an alternative to conventional mechanisms such as buttons or graphical user interfaces.

For example, the user may provide input to assistant 1002 such as "I need to wake tomorrow at 8am". Once assistant 1002 has determined the user's intent, using the techniques described herein, assistant 1002 can call external services 1360 to interface with an alarm clock function or application on the device. Assistant 1002 sets the alarm on behalf of the user. In this manner, the user can use assistant 1002 as a replacement for conventional mechanisms for setting the alarm or performing other functions on the device. If the user's requests are ambiguous or need further clarification, assistant 1002 can use the various techniques described herein, including active elicitation, paraphrasing, suggestions, and the like, and which may be adapted to a hands-free context, so that the correct services 1360 are called and the intended action taken. In one embodiment, assistant 1002 may prompt the user for confirmation and/or request additional context information from any suitable source before calling a service 1360 to perform a function. In one embodiment, a user can selectively disable assistant's 1002 ability to call particular services 1360, or can disable all such service-calling if desired.

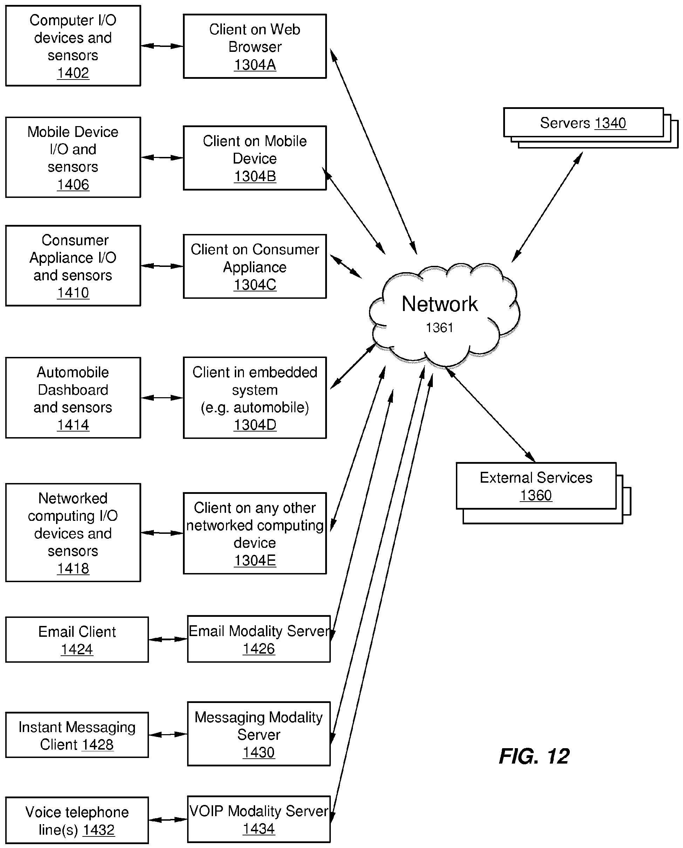

The system of the present invention can be implemented with any of a number of different types of clients 1304 and modes of operation. Referring now to Fig. 12, there is shown a block diagram depicting a system architecture illustrating several different types of clients 1304 and modes of operation. One skilled in the art will recognize that the various types of clients 1304 and modes of operation shown in Fig. 12 are merely exemplary, and that the system of the present invention can be implemented using clients 1304 and/or modes of operation other than those depicted. Additionally, the system can include any or all of such clients 1304 and/or modes of operation, alone or in any combination. Depicted examples include:
- Computer devices with input/output devices and/or sensors 1402. A client component may be deployed on any such computer device 1402. At least one embodiment may be implemented using a web browser 1304A or other software application for enabling communication with servers 1340 via network 1361. Input and output channels may of any type, including for example visual and/or auditory channels. For example, in one embodiment, the system of the invention can be implemented using voice-based communication methods, allowing for an embodiment of the assistant for the blind whose equivalent of a web browser is driven by speech and uses speech for output.
- Mobile Devices with I/O and sensors 1406, for which the client may be implemented as an application on the mobile device 1304B. This includes, but is not limited to, mobile phones, smartphones, personal digital assistants, tablet devices, networked game consoles, and the like.
- Consumer Appliances with I/O and sensors 1410, for which the client may be implemented as an embedded application on the appliance 1304C.
- Automobiles and other vehicles with dashboard interfaces and sensors 1414, for which the client may be implemented as an embedded system application 1304D. This includes, but is not limited to, car navigation systems, voice control systems, in-car entertainment systems, and the like.
- Networked computing devices such as routers 1418 or any other device that resides on or interfaces with a network, for which the client may be implemented as a device-resident application 1304E.
- Email clients 1424, for which an embodiment of the assistant is connected via an Email Modality Server 1426. Email Modality server 1426 acts as a communication bridge, for example taking input from the user as email messages sent to the assistant and sending output from the assistant to the user as replies.
- Instant messaging clients 1428, for which an embodiment of the assistant is connected via a Messaging Modality Server 1430. Messaging Modality server 1430 acts as a communication bridge, taking input from the user as messages sent to the assistant and sending output from the assistant to the user as messages in reply.
- Voice telephones 1432, for which an embodiment of the assistant is connected via a Voice over Internet Protocol (VoIP) Modality Server 1434. VoIP Modality server 1434 acts as a communication bridge, taking input from the user as voice spoken to the assistant and sending output from the assistant to the user, for example as synthesized speech, in reply.

For messaging platforms including but not limited to email, instant messaging, discussion forums, group chat sessions, live help or customer support sessions and the like, assistant 1002 may act as a participant in the conversations. Assistant 1002 may monitor the conversation and reply to individuals or the group using one or more the techniques and methods described herein for one-to-one interactions.

In various embodiments, functionality for implementing the techniques of the present invention can be distributed among any number of client and/or server components. For example, various software modules can be implemented for performing various functions in connection with the present invention, and such modules can be variously implemented to run on server and/or client components. Further details for such an arrangement are provided in related U.S. Utility Application US2013185081 for "Intelligent Automated Assistant", filed January 10, 2011.

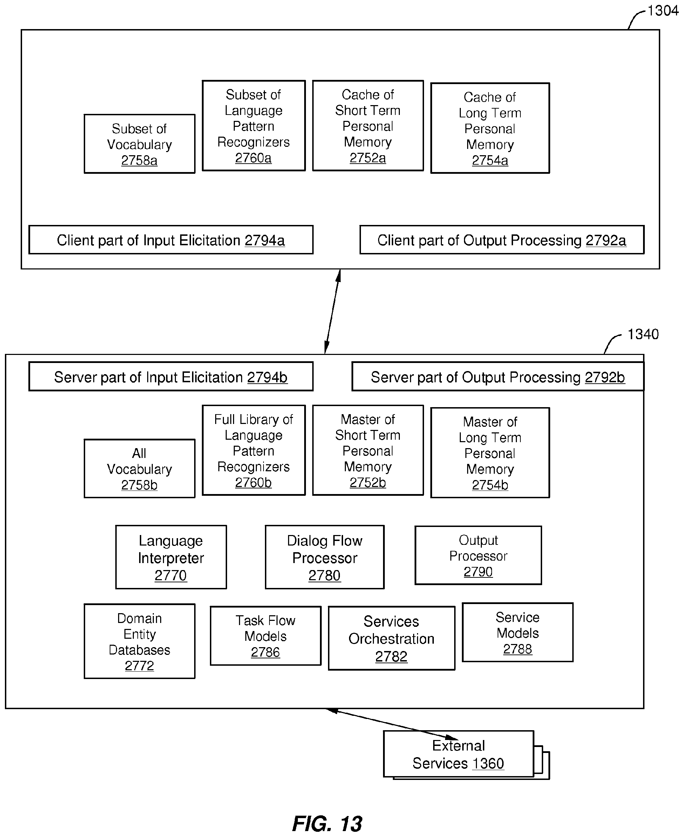

In the example of Fig. 13, input elicitation functionality and output processing functionality are distributed among client 1304 and server 1340, with client part of input elicitation 2794a and client part of output processing 2792a located at client 1304, and server part of input elicitation 2794b and server part of output processing 2792b located at server 1340. The following components are located at server 1340:
- complete vocabulary 2758b;
- complete library of language pattern recognizers 2760b;
- master version of short term personal memory 2752b;
- master version of long term personal memory 2754b.

In one embodiment, client 1304 maintains subsets and/or portions of these components locally, to improve responsiveness and reduce dependence on network communications. Such subsets and/or portions can be maintained and updated according to well known cache management techniques. Such subsets and/or portions include, for example:
- subset of vocabulary 2758a;
- subset of library of language pattern recognizers 2760a;
- cache of short term personal memory 2752a;
- cache of long term personal memory 2754a.

Additional components may be implemented as part of server 1340, including for example:
- language interpreter 2770;
- dialog flow processor 2780;
- output processor 2790;
- domain entity databases 2772;
- task flow models 2786;
- services orchestration 2782;
- service capability models 2788.

Server 1340 obtains additional information by interfacing with external services 1360 when needed.

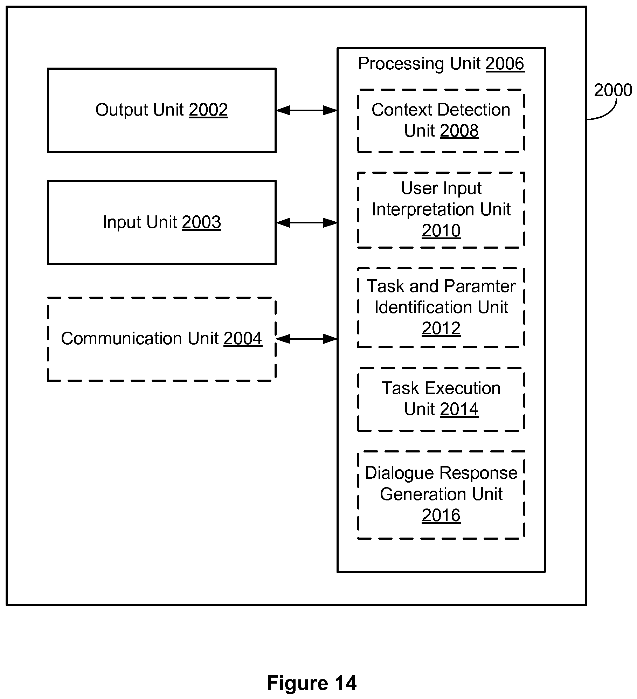

Referring now to Fig. 14, there is shown a functional block diagram of an electronic device 2000 in accordance with some embodiments. The functional blocks of the device may be implemented by hardware, software, or a combination of hardware and software to carry out the principles of the invention. It is understood by persons of skill in the art that the functional blocks described in Fig. 14 may be combined or separated into sub-blocks to implement the principles of the invention as described above. Therefore, the description herein may support any possible combination or separation or further definition of the functional blocks described herein.

As shown in Figure 14, the electronic device 2000 includes a processing unit 2006. In some embodiments, the processing unit 2006 includes a context detection unit 2008, a user input interpretation unit 2010, a task and parameter identification unit 2012, a task execution unit 2014, and a dialog response generation unit 2016. The electronic device 2000 also includes an output unit 2002 coupled to the processing unit and configured to prompt a user for input. The electronic device also includes an input unit 2003 coupled to the processing unit and configured to receive user input. In some embodiments, the electronic device 2000 also includes a communication unit 2004 configured to receive data from one or more sensors of the device 2000 and/or sensors/devices external to the electronic device 2000, such as an environmental condition sensor, peripheral device, an onboard system of a vehicle, a location sensor (e.g., GPS sensor), a speed sensor, etc.

The processing unit is configured to: detect whether or not a hands-free context is active (e.g., with the context detection unit 2008); interpret the received user input to derive a representation of user intent (e.g., with the user input interpretation unit 2010); identify at least one task and at least one parameter for the task, based at least in part on the derived representation of user intent (e.g., with the task and parameter identification unit 2012); execute the at least one task using the at least one parameter, to derive a result (e.g., with the task execution unit 2014); generate a dialog response based on the derived result (e.g., with the dialog response generation unit 2016); and cause the output device to output the generated dialog response (e.g., with the output unit 2002). Responsive to detection that the device is in a hands-free context (e.g., by the context detection unit 2008), at least one of the steps of prompting the user for input, receiving user input, interpreting the receiving user input, identifying the at least one task and at least one parameter for the task, and generating the dialog response is performed (e.g., by the input unit 2003, the output unit 2002, and/or the processing unit 2006) in a manner consistent with limitations associated with the hands-free context.

In some embodiments, where at least two interaction modes are available for user interaction with the computing device, responsive to detection that the device is in a hands-free context, at least one of the steps of prompting the user for input, receiving user input, interpreting the receiving user input, identifying the at least one task and at least one parameter for the task, and generating the dialog response is performed (e.g., with one or more units of the processing unit 2006) using a first interaction mode adapted to hands-free operation; and responsive to detection that the device is not in a hands-free context, at least one of the steps of prompting the user for input, receiving user input, interpreting the receiving user input, identifying the at least one task and at least one parameter for the task, and generating the dialog response is performed (e.g., with one or more units of the processing unit 2006) using a second interaction mode not adapted to hands-free operation.

In some embodiments, the processing unit 2006 is further configured to detect whether or not a hands-free context is active (e.g., with the context detection unit 2008) by detecting a condition indicating a limitation in at least one selected from the group consisting of: the ability of a user to view visual output presented by the computing device; the ability of a user to interact with a graphical user interface presented by the computing device; the ability of a user to use a physical component of the computing device; the ability of a user to perform touch input on the computing device; the ability of a user to activate a switch on the computing device; and the ability of a user to use a keyboard on the computing device.

In some embodiments, the output unit 2002 is configured to prompt a user for input by: responsive to detection that the device is not in a hands-free context, prompting the user via a first output mode not adapted to the hands-free context; and responsive to detection that the device is in a hands-free context, prompting the user via a second output mode adapted to the hands-free context. In some embodiments, the first output mode is a visual output mode. In some embodiments, the second output mode is an auditory output mode.

In some embodiments, prompting the user via a visual output mode (e.g., with the output unit 2002) comprises displaying a prompt on a display screen; and prompting the user via an auditory output mode (e.g., with the output unit 2002) comprises outputting a spoken prompt.

In some embodiments, the processing unit 2006 is configured to, responsive to detection that the device is in a hands-free context, interpret the received user input using a vocabulary associated with hands-free operation (e.g., with the user interpretation unit 2010).

In some embodiments, responsive to detection that the device is in a hands-free context, the processing unit 2006 is configured to perform at least one task flow identification step associated with hands-free operation (e.g., with the task execution unit 2014). In some embodiments, performing at least one task flow identification step associated with hands-free operation comprises prompting the user to review and confirm entered content via a speech-based interface (e.g., with the output unit 2002 and/or the input unit 2003).

In some embodiments, the processing unit 2006 is further configured to perform the at least one task flow step using auditory output (e.g., with the task execution unit 2014 and/or the output unit 2002). In some embodiments, the processing unit 2006 is further configured to perform the at least one task flow identification step by performing at least one task flow step selected from a limited group of available task flow steps suited to the hands-free context (e.g., with the task execution unit 2014).

In some embodiments, responsive to detection that the device is in a hands-free context, the processing unit 2006 is configured to generate the dialog response in a speech-based output mode (e.g., with the dialogue response generation unit 2016).

In some embodiments, the processing unit 2006 is configured to generate the dialog response in the speech-based output mode by paraphrasing at least a portion of the user input in spoken form (e.g., with the dialogue response generation unit 2016). In some embodiments, the processing unit 2006 is configured to generate the dialog response in the speech-based output mode by generating speech using a plurality of voices to differentiate paraphrased user input from other spoken output (e.g., with the dialogue response generation unit 2016). In some embodiments, the processing unit 2006 is configured to generate the dialog response in the speech-based output mode by combining a dialog template with at least one item of personal data (e.g., with the dialogue response generation unit 2016).

In some embodiments, the processing unit 2006 is configured to detect whether or not a hands-free context is active by performing at least one process selected from the group consisting of: receiving user input specifying a hands-free context (e.g., with the input unit 2003); receiving data from at least one sensor indicating an environmental condition associated with a hands-free context (e.g., with the communication unit 2004); detecting connection of a peripheral device associated with a hands-free context (e.g., with the communication unit 2004); detecting disconnection of a peripheral device not associated with a hands-free context (e.g., with the communication unit 2004); detecting communication with an onboard system of a vehicle (e.g., with the communication unit 2004); detecting current location (e.g., with the communication unit 2004); and detecting current speed (e.g., with the communication unit 2004).

In some embodiments, the output unit 2002 is configured to prompt the user via a conversational interface; and the input unit 2003 is configured to receive user input via the conversational interface. In some embodiments, the input unit 2003 is configured to receive spoken input; and the processing unit 2006 is configured to convert the spoken input to a text representation (e.g., with the user input interpretation unit 2010).

### Conceptual Architecture

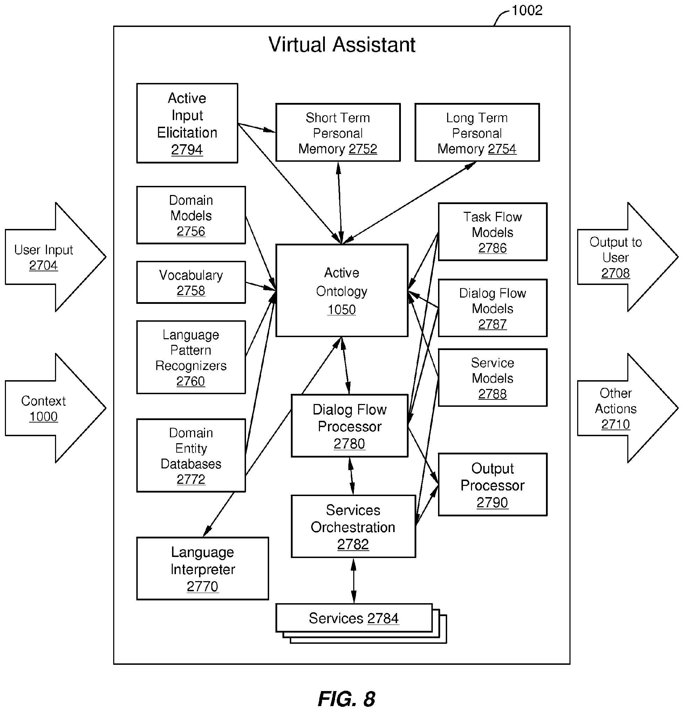

Referring now to Fig. 8, there is shown a simplified block diagram of a specific example embodiment of multimodal virtual assistant 1002. As described in greater detail in related U.S. utility publications referenced above, different embodiments of multimodal virtual assistant 1002 may be configured, designed, and/or operable to provide various different types of operations, functionalities, and/or features generally relating to virtual assistant technology. Further, as described in greater detail herein, many of the various operations, functionalities, and/or features of multimodal virtual assistant 1002 disclosed herein may enable or provide different types of advantages and/or benefits to different entities interacting with multimodal virtual assistant 1002. The embodiment shown in Fig. 8 may be implemented using any of the hardware architectures described above, or using a different type of hardware architecture.

For example, according to different embodiments, multimodal virtual assistant 1002 may be configured, designed, and/or operable to provide various different types of operations, functionalities, and/or features, such as, for example, one or more of the following (or combinations thereof):
- automate the application of data and services available over the Internet to discover, find, choose among, purchase, reserve, or order products and services. In addition to automating the process of using these data and services, multimodal virtual assistant 1002 may also enable the combined use of several sources of data and services at once. For example, it may combine information about products from several review sites, check prices and availability from multiple distributors, and check their locations and time constraints, and help a user find a personalized solution to their problem.
- automate the use of data and services available over the Internet to discover, investigate, select among, reserve, and otherwise learn about things to do (including but not limited to movies, events, performances, exhibits, shows and attractions); places to go (including but not limited to travel destinations, hotels and other places to stay, landmarks and other sites of interest, and the like); places to eat or drink (such as restaurants and bars), times and places to meet others, and any other source of entertainment or social interaction that may be found on the Internet.
- enable the operation of applications and services via natural language dialog that are otherwise provided by dedicated applications with graphical user interfaces including search (including location-based search); navigation (maps and directions); database lookup (such as finding businesses or people by name or other properties); getting weather conditions and forecasts, checking the price of market items or status of financial transactions; monitoring traffic or the status of flights; accessing and updating calendars and schedules; managing reminders, alerts, tasks and projects; communicating over email or other messaging platforms; and operating devices locally or remotely (e.g., dialing telephones, controlling light and temperature, controlling home security devices, playing music or video, and the like). In one embodiment, multimodal virtual assistant 1002 can be used to initiate, operate, and control many functions and apps available on the device.
- offer personal recommendations for activities, products, services, source of entertainment, time management, or any other kind of recommendation service that benefits from an interactive dialog in natural language and automated access to data and services.

According to different embodiments, at least a portion of the various types of functions, operations, actions, and/or other features provided by multimodal virtual assistant 1002 may be implemented at one or more client systems(s), at one or more server system(s), and/or combinations thereof.

According to different embodiments, at least a portion of the various types of functions, operations, actions, and/or other features provided by multimodal virtual assistant 1002 may use contextual information in interpreting and operationalizing user input, as described in more detail herein.

For example, in at least one embodiment, multimodal virtual assistant 1002 may be operable to utilize and/or generate various different types of data and/or other types of information when performing specific tasks and/or operations. This may include, for example, input data/information and/or output data/information. For example, in at least one embodiment, multimodal virtual assistant 1002 may be operable to access, process, and/or otherwise utilize information from one or more different types of sources, such as, for example, one or more local and/or remote memories, devices and/or systems. Additionally, in at least one embodiment, multimodal virtual assistant 1002 may be operable to generate one or more different types of output data/information, which, for example, may be stored in memory of one or more local and/or remote devices and/or systems.

Examples of different types of input data/information which may be accessed and/or utilized by multimodal virtual assistant 1002 may include, but are not limited to, one or more of the following (or combinations thereof):
- Voice input: from mobile devices such as mobile telephones and tablets, computers with microphones, Bluetooth headsets, automobile voice control systems, over the telephone system, recordings on answering services, audio voicemail on integrated messaging services, consumer applications with voice input such as clock radios, telephone station, home entertainment control systems, and game consoles.
- Text input from keyboards on computers or mobile devices, keypads on remote controls or other consumer electronics devices, email messages sent to the assistant, instant messages or similar short messages sent to the assistant, text received from players in multiuser game environments, and text streamed in message feeds.
- Location information coming from sensors or location-based systems. Examples include Global Positioning System (GPS) and Assisted GPS (A-GPS) on mobile phones. In one embodiment, location information is combined with explicit user input. In one embodiment, the system of the present invention is able to detect when a user is at home, based on known address information and current location determination. In this manner, certain inferences may be made about the type of information the user might be interested in when at home as opposed to outside the home, as well as the type of services and actions that should be invoked on behalf of the user depending on whether or not he or she is at home.
- Time information from clocks on client devices. This may include, for example, time from telephones or other client devices indicating the local time and time zone. In addition, time may be used in the context of user requests, such as for instance, to interpret phrases such as "in an hour" and "tonight".
- Compass, accelerometer, gyroscope, and/or travel velocity data, as well as other sensor data from mobile or handheld devices or embedded systems such as automobile control systems. This may also include device positioning data from remote controls to appliances and game consoles.
- Clicking and menu selection and other events from a graphical user interface (GUI) on any device having a GUI. Further examples include touches to a touch screen.
- Events from sensors and other data-driven triggers, such as alarm clocks, calendar alerts, price change triggers, location triggers, push notification onto a device from servers, and the like.

The input to the embodiments described herein also includes the context of the user interaction history, including dialog and request history.

As described in the related U.S. utility publications referenced above, many different types of output data/information may be generated by multimodal virtual assistant 1002. These may include, but are not limited to, one or more of the following (or combinations thereof):
- Text output sent directly to an output device and/or to the user interface of a device;
- Text and graphics sent to a user over email;
- Text and graphics send to a user over a messaging service;
- Speech output, which may include one or more of the following (or combinations thereof):
   ∘ Synthesized speech;
   ∘ Sampled speech;
   ∘ Recorded messages;
- Graphical layout of information with photos, rich text, videos, sounds, and hyper-links (for instance, the content rendered in a web browser);
- Actuator output to control physical actions on a device, such as causing it to turn on or off, make a sound, change color, vibrate, control a light, or the like;
- Invoking other applications on a device, such as calling a mapping application, voice dialing a telephone, sending an email or instant message, playing media, making entries in calendars, task managers, and note applications, and other applications;
- Actuator output to control physical actions to devices attached or controlled by a device, such as operating a remote camera, controlling a wheelchair, playing music on remote speakers, playing videos on remote displays, and the like.

It may be appreciated that the multimodal virtual assistant 1002 of Fig. 8 is but one example from a wide range of virtual assistant system embodiments which may be implemented. Other embodiments of the virtual assistant system (not shown) may include additional, fewer and/or different components/features than those illustrated, for example, in the example virtual assistant system embodiment of Fig. 8.

Multimodal virtual assistant 1002 may include a plurality of different types of components, devices, modules, processes, systems, and the like, which, for example, may be implemented and/or instantiated via the use of hardware and/or combinations of hardware and software. For example, as illustrated in the example embodiment of Fig. 8, assistant 1002 may include one or more of the following types of systems, components, devices, processes, and the like (or combinations thereof):
- One or more active ontologies 1050;
- Active input elicitation component(s) 2794 (may include client part 2794a and server part 2794b);
- Short term personal memory component(s) 2752 (may include master version 2752b and cache 2752a);
- Long-term personal memory component(s) 2754 (may include master version 2754b and cache 2754a);
- Domain models component(s) 2756;
- Vocabulary component(s) 2758 (may include complete vocabulary 2758b and subset 2758a);
- Language pattern recognizer(s) component(s) 2760 (may include full library 2760b and subset 2760a);
- Language interpreter component(s) 2770;
- Domain entity database(s) 2772;
- Dialog flow processor component(s) 2780;
- Services orchestration component(s) 2782;
- Services component(s) 2784;
- Task flow models component(s) 2786;
- Dialog flow models component(s) 2787;
- Service models component(s) 2788;
- Output processor component(s) 2790.

In certain client/server-based embodiments, some or all of these components may be distributed between client 1304 and server 1340. Such components are further described in the related U.S. utility publications referenced above.

In one embodiment, virtual assistant 1002 receives user input 2704 via any suitable input modality, including for example touchscreen input, keyboard input, spoken input, and/or any combination thereof. In one embodiment, assistant 1002 also receives context information 1000, which may include event context, application context, personal acoustic context, and/or other forms of context, as described in related U.S. Utility Application 20120265528, entitled "Using Context Information to Facilitate Processing of Commands in a Virtual Assistant", filed September 30, 2011. Context information 1000 also includes a hands-free context, if applicable, which can be used to adapt the user interface according to techniques described herein.

Upon processing user input 2704 and context information 1000 according to the techniques described herein, virtual assistant 1002 generates output 2708 for presentation to the user. Output 2708 can be generated according to any suitable output modality, which may be informed by the hands-free context as well as other factors, if appropriate. Examples of output modalities include visual output as presented on a screen, auditory output (which may include spoken output and/or beeps and other sounds), haptic output (such as vibration), and/or any combination thereof.

Additional details concerning the operation of the various components depicted in Fig. 8 are provided in related U.S. Utility Application US2012016678 for "Intelligent Automated Assistant", filed January 10, 2011.

### Adapting User Interfaces to a Hands-Free Context

For illustrative purposes, the invention is described herein by way of example. However, one skilled in the art will recognize that the particular input and output mechanisms depicted in the examples are merely intended to illustrate one possible interaction between the user and assistant 1002, and are not intended to limit the scope of the invention as claimed. Furthermore, in alternative embodiments, the invention can be implemented in a device without necessarily involving a multimodal virtual assistant 1002; rather, the functionality of the invention can be implemented directly in an operating system or application running on any suitable device, without departing from the essential characteristics of the invention as solely defined in the claims.

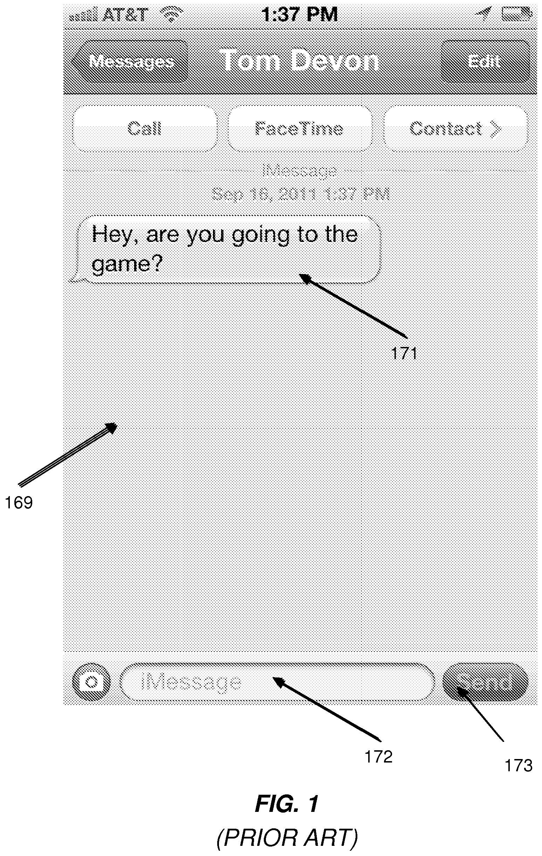

Referring now to Fig. 1, there is shown a screen shot illustrating an example of a conventional hands-on interface 169 for reading a text message, according to the prior art. A graphical user interface (GUI) as shown in Fig. 1 generally requires the user to be able to read fine details, such as the message text shown in bubble 171, and respond by typing in text field 172 and tapping send button 173. In many devices, such actions require looking at and touching the screen, and are therefore impractical to perform in certain contexts, referred to herein as hands-free contexts.

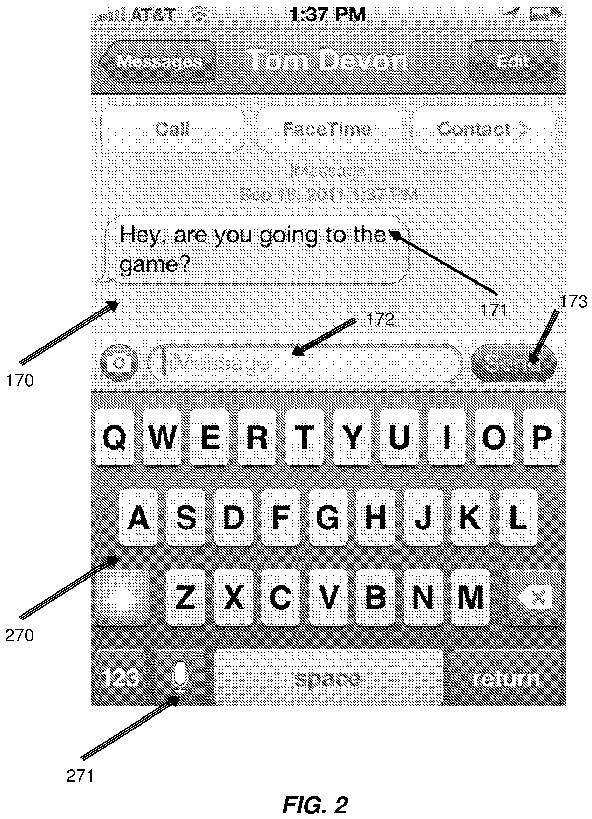

Referring now to Fig. 2, there is shown a screen shot illustrating an example of an interface 170 for responding to text message 171. Virtual keyboard 270 is presented in response to the user tapping in text field 172, permitting text to be entered in text field 172 by tapping on areas of the screen corresponding to keys. The user taps on send button 173 when the text message has been entered. If the user wishes to enter text by speaking, he or she taps on speech button 271, which invokes a voice dictation interface for receiving spoken input and converting it into text. Thus, button 271 provides a mechanism by which the user can indicate that he or she is in a hands-free context.

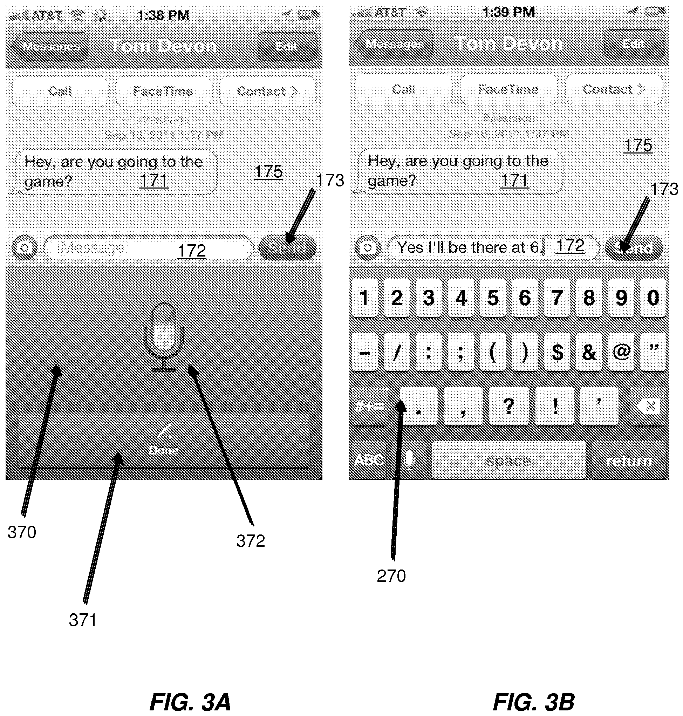

Referring now to Figs. 3A and 3B, there is shown a sequence of screen shots illustrating an example of an interface 175 wherein a voice dictation interface is used to reply to text message 171. Screen 370 is presented, for example, after user taps on speech button 271. Microphone icon 372 indicates that the device is ready to accept spoken input. The user inputs speech, which is received via speech input device 1211, which may be a microphone or similar device. The user taps on Done button 371 to indicate that he or she has finished entering spoken input.

The spoken input is converted to text, using any well known speech-to-text algorithm or system. Speech-to-text functionality can reside on device 60 or on a server. In one embodiment, speech-to-text functionality is implemented using, for example, Nuance Recognizer, available from Nuance Communications, Inc. of Burlington, Massachusetts.

As shown in Fig. 3B, the results of the conversion can be shown in field 172. Keyboard 270 can be presented, to allow the user to edit the generated text in field 172. When the user is satisfied with the entered text, he or she taps on Send button 173 to cause the text message to be sent.

In the example described in connection with Figs. 2, 3A, and 3B, several operations require the user to look at the display screen and/or provide touch input. Such operations include:
- reading text message 171 on the display screen;
- touching button 271 to enter speech input mode;
- touching Done button 371 to indicate that speech input is finished;
- viewing the converted text generated from the user's spoken input;
- touching Send button 173 to send the message.

In one embodiment of the present invention, mechanisms for accepting and processing speech input are integrated into device 60 in a manner that reduces the need for a user to interact with a display screen and/or to use a touch interface when in a hands-free context. Accordingly, the system of the present invention is thus able to provide an improved user interface for interaction in a hands-free context.

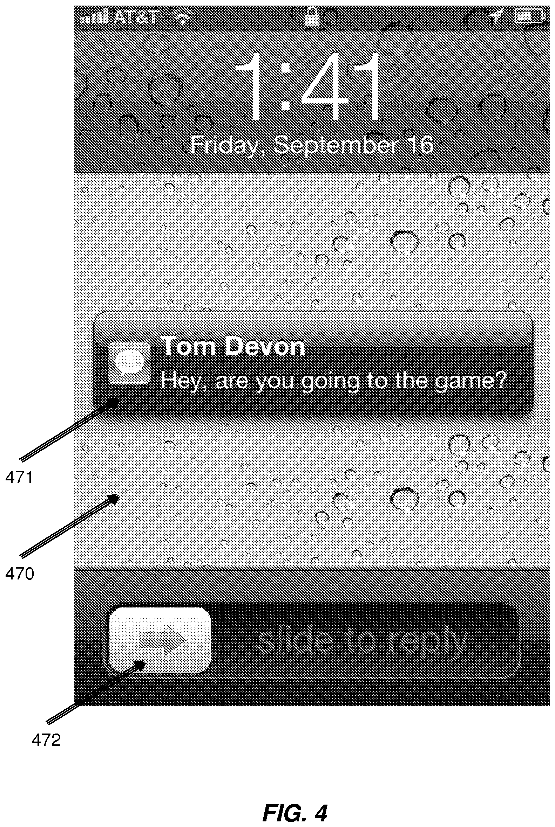

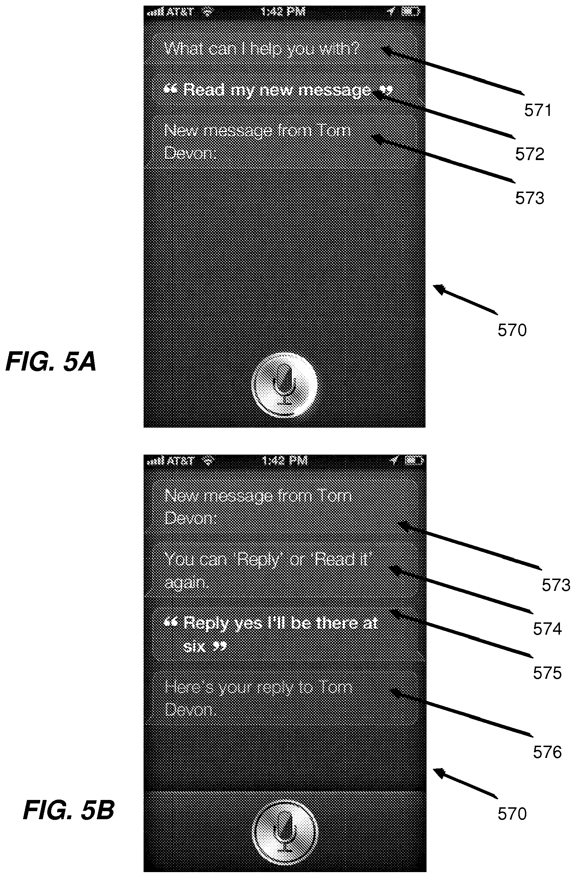

Referring now to Figs. 4 and 5A through 5D, there is shown a series of screen shots illustrating an example of an interface for receiving and replying to a text message, according to one embodiment wherein a hands-free context is recognized; thus, in this example, the need for the user to interact with the screen is reduced, in accordance with the techniques of the present invention.

In Fig. 4, screen 470 depicts text message 471 which is received while device 60 is in a locked mode. The user can activate slider 472 to reply to or otherwise interact with message 471 according to known techniques. However, in this example, device 60 may be out of sight and/or out of reach, or the user may be unable to interact with device 60, for example, if he or she is driving or engaged in some other activity. As described herein, multimodal virtual assistant 1002 provides functionality for receiving and replying to text message 471 in such a hands-free context.

In one embodiment, virtual assistant 1002 installed on device 60 automatically detects the hands-free context. Such detection may take place by any means of determining a scenario or situation where it may be difficult or impossible for the user to interact with the screen of device 60 or to properly operate the GUI.

For example and without limitation, determination of hands-free context can be made based on any of the following, singly or in any combination:
- data from sensors (including, for example, compass, accelerometer, gyroscope, speedometer, ambient light sensor, BlueTooth connection detector, clock, WiFi signal detector, microphone, and the like);
- determining that device 60 is in a certain geographic location, for example via GPS;
- data from a clock (for example, hands-free context can be specified as being active at certain times of day and/or certain days of the week);
- predefined parameters (for example, the user or an administrator can specify that hands-free context is active when any condition or combination of conditions is detected);
- connection of Bluetooth or other wireless I/O devices (for example, if a connection with a BlueTooth-enabled interface of a moving vehicle is detected);
- any other information that may indicate that the user is in a moving vehicle or driving a car;
- presence or absence of attached peripherals, including headphones, headsets, things connected by adapter cables, and the like;
- determining that the user is not in contact with or in close proximity to device 60;
- the particular signal used to trigger interaction with assistant 1002 (for example, a motion gesture in which the user holds the device to the ear, or the pressing of a button on a Bluetooth device, or pressing of a button on an attached audio device);
- detection of specific words in a continuous stream of words (for example, assistant 1002 can be configured to be listening for commands, and to be invoked when the user calls its name or says some command such as "Computer!"; the particular command can indicate whether or not hands-free context is active.

In other embodiments, the user can manually indicate that hands-free context is active or inactive, and/or can schedule hands-free context to activate and/or deactivate at certain times of day and/or certain days of the week.

In one embodiment, upon receiving text message 470 while in hands-free context, multimodal virtual assistant 1002 causes device 60 to output an audio indication, such as a beep or tone, indicating receipt of a text message. As described above, the user can activate slider 472 to reply to or otherwise interact with message 471 according to known techniques (for example if hands-free mode was incorrectly detected, or if the user elects to stop driving or otherwise make him or herself available for hands-on interaction with device 60). Alternatively, the user can engage in a spoken dialog with assistant 1002 to enable interaction with assistant 1002 in a hands-free manner.

In one embodiment, the user initiates the spoken dialog by any suitable mechanism appropriate to a hands-free context. For example, in an environment where the user is driving a BlueTooth-equipped vehicle, and device 60 is in communication with the vehicle, an easily-accessed button (for example, one mounted on the steering wheel of a car) may be available. Pressing the button initiates a spoken dialog with assistant 1002, and allows the user to communicate with assistant 1002 via the BlueTooth connection and through a microphone and/or speaker installed in the vehicle. Alternatively, the user can initiate the spoken dialog by pressing a button on device 60 itself, or on a headset, or on any other peripheral device, or by performing some other distinctive action that signals to assistant 1002 that the user wishes to initiate a spoken dialog. As another example, the user can speak a command that is understood by assistant 1002 and that initiates the spoken dialog. One skilled in the art will recognize that many other techniques can be provided for allowing a user to easily initiate a spoken dialog with assistant 1002. Preferably, the mechanism that is used for initiating the spoken dialog does not require hand-eye coordination on the part of the user, thus allowing the user to focus on a primary task, such as driving, and/or can be performed by an individual having a disability that prevents, hinders, restricts, or limits his or her ability to interact with a GUI such as depicted in Figs. 2, 3A, and 3B.

Once the spoken dialog has been initiated, assistant 1002 listens for spoken input. In one embodiment, assistant 1002 acknowledges the spoken input by some output mechanism that is easily detected by the user while in the hands-free context. An example is an audio beep or tone, and/or visual output on a vehicle dashboard that is easily seen by the user even while driving, and/or by some other mechanism. Spoken input is processed using known speech recognition techniques. Assistant 1002 then performs action(s) indicated by the spoken input. In one embodiment, assistant 1002 provides spoken output, which may be output via speakers (in device 60 or installed in the vehicle), headphones or the like, so as to continue the audio dialog with the user. For example, assistant 1002 can read content of text messages, email messages, and the like, and can provide options to the user in spoken form.

For example, if the user says "Read my new message", assistant 1002 may cause device 60 to emit an acknowledgement tone. Assistant may then 1002 emit spoken output such as "You have a new message from Tom Devon. It says: 'Hey, are you going to the game?'". Spoken output may be generated by assistant 1002 using any known technique for converting text to speech. In one embodiment, text-to-speech functionality is implemented using, for example, Nuance Vocalizer, available from Nuance Communications, Inc. of Burlington, Massachusetts.

Referring now to Fig. 5A, there is shown an example of a screen shot 570 showing output that may be presented on the screen of device 60 while the verbal interchange between the user and assistant 1002 is taking placing. In some hands-free situations, the user can see the screen but cannot easily touch it, for example if the output on the screen of device 60 is being replicated on a display screen of a vehicle's navigation system. Visual echoing of the spoken conversation, as depicted in Figs. 5A through 5D, can help the user to verify that his or her spoken input has been properly and accurately understood by assistant 1002, and can further help the user understand assistant's 1002 spoken replies. However, such visual echoing is optional, and the present invention can be implemented without any visual display on the screen of device 60 or elsewhere. Thus, the user can interact with assistant 1002 purely by spoken input and output, or by a combination of visual and spoken inputs and/or outputs.

In the example, assistant 1002 displays and speaks a prompt 571. In response to user input, assistant 1002 repeats the user input 572, on the display and/or in spoken form. Assistant then introduces 573 the incoming text message and reads it. In one embodiment, the text message may also be displayed on the screen.

As shown in Fig. 5B, after reading the incoming message to the user, assistant 1002 then tells the user that the user can "reply or read it again" 574. Again, such output is provided, in one embodiment, in spoken form (i.e., verbally). In this manner, the system of the present invention informs the user of available actions in a manner that is well-suited to the hands-free context, in that it does not require the user to look at text fields, buttons, and/or links, and does not require direct manipulation by touch or interaction with on-screen objects. As depicted in Fig. 5B, in one embodiment the spoken output is echoed 574 on-screen; however, such display of the spoken output is not required. In one embodiment, echo messages displayed on the screen scroll upwards automatically according to well known mechanisms.

In the example, the user says "Reply yes I'll be there at six". As depicted in Fig. 5B, in one embodiment the user's spoken input is echoed 575 so that the user can check that it has been properly understood. In addition, in one embodiment, assistant 1002 repeats the user's spoken input in auditory form, so that the user can verify understanding of his or her command even if he or she cannot see the screen. Thus, the system of the present invention provides a mechanism by which the user can initiate a reply command, compose a response, and verify that the command and the composed response were properly understood, all in a hands-free context and without requiring the user to view a screen or interact with device 60 in a manner that is not feasible or well-suited to the current operating environment.

In one embodiment, assistant 1002 provides further verification of the user's composed text message by reading back the message. In this example, assistant 1002 says, verbally, "Here's your reply to Tom Devon: 'Yes I'll be there at six."'. In one embodiment, the meaning of the quotation marks is conveyed with changes in voice and/or prosody. For example, the string "Here's your reply to Tom Devon" can be spoken in one voice, such as a male voice, while the string "Yes I'll be there at six" can be spoken in another voice, such as a female voice. Alternatively, the same voice can be used, but with different prosody to convey the quotation marks.

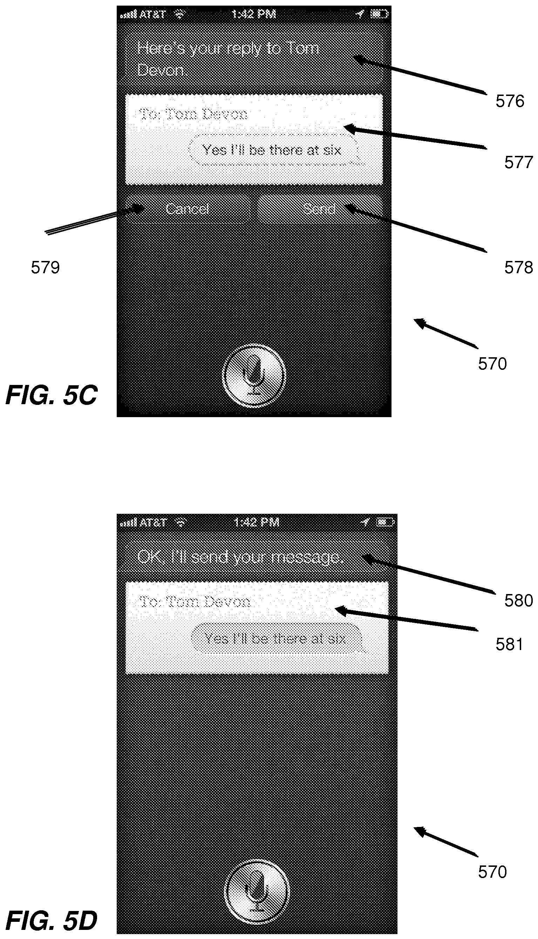

In one embodiment, assistant 1002 provides visual echoing of the spoken interchange, as depicted in Figs. 5B and 5C. Figs. 5B and 5C show message 576 echoing assistant's 1002 spoken output of "Here's your reply to Tom Devon". Fig. 5C shows a summary 577 of the text message being composed, including recipient and content of the message. In Fig. 5C, previous messages have scrolled upward off the screen, but can be viewed by scrolling downwards according to known mechanisms. Send button 578 sends the message; cancel button 579 cancels it. In one embodiment, the user can also send or cancel the message by speaking a keyword, such as "send" or "cancel". Alternatively, assistant 1002 can generate a spoken prompt, such as "Ready to send it?"; again, a display 570 with buttons 578, 579 can be shown while the spoken prompt is output. The user can then indicate what he or she wishes to do by touching buttons 578, 579 or by answering the spoken prompt. The prompt can be issued in a format that permits a "yes" or "no" response, so that the user does not need to use any special vocabulary to make his or her intention known.

In one embodiment, assistant 1002 can confirm the user's spoken command to send the message, for example by generating spoken output such as "OK, I'll send your message." As shown in Fig. 5D, this spoken output can be echoed 580 on screen 570, along with summary 581 of the text message being sent.

The spoken exchange described above, combined with optional visual echoing, illustrates an example by which assistant 1002 provides redundant outputs in a multimodal interface. In this manner, assistant 1002 is able to support a range of contexts including eyes-free, hands-free, and fully hands-on.

The example also illustrates mechanisms by which the displayed and spoken output can differ from one another to reflect their different contexts. The example also illustrates ways in which alternative mechanisms for responding are made available. For example, after assistant says "Ready to send it?" and displays screen 570 shown in Fig. 5C, the user can say the word "send", or "yes", or tap on Send button 578 on the screen. Any of these actions would be interpreted the same way by assistant 1002, and would cause the text message to be sent. Thus, the system of the present invention provides a high degree of flexibility with respect to the user's interaction with assistant 1002.

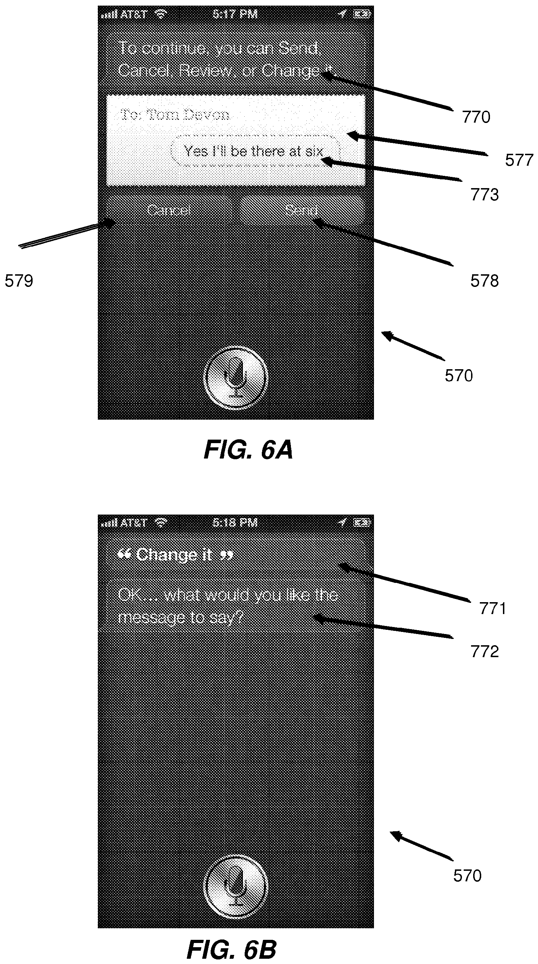

Referring now to Figs. 6A through 6C, there is shown a series of screen shots illustrating an example of operation of multimodal virtual assistant 1002 according to an embodiment of the present invention, wherein the user revises text message 577 in a hands-free context, for example to correct mistakes or add more content. In a visual interface involving direct manipulation, such as described above in connection with Figs. 3A and 3B, the user might type on virtual keyboard 270 to edit the contents of text field 172 and thereby revise text message 577. Since such operations may not be feasible in a hands-free context, multimodal virtual assistant 1002 provides a mechanism by which such editing of text message 577 can take place via spoken input and output in a conversational interface

In one embodiment, once text message 577 has been composed (based, for example, on the user's spoken input), multimodal virtual assistant 1002 generates verbal output informing the user that the message is ready to be sent, and asking the user whether the message should be sent. If the user indicates, via verbal or direct manipulation input, that he or she is not ready to send the message, then multimodal virtual assistant 1002 generates spoken output to inform the user of available options, such as sending, canceling, reviewing, or changing the message. For example, assistant 1002 may say with "OK, I won't send it yet. To continue, you can Send, Cancel, Review, or Change it."

As shown in Fig. 6A, in one embodiment multimodal virtual assistant 1002 echoes the spoken output by displaying message 770, visually informing the user of the options available with respect to text message 577. In one embodiment, text message 577 is displayed in editable field 773, to indicate that the user can edit message 577 by tapping within field 773, along with buttons 578, 579 for sending or canceling text message 577, respectively. In one embodiment, tapping within editable field 773 invokes a virtual keyboard (similar to that depicted in Fig. 3B), to allow editing by direct manipulation.

The user can also interact with assistant 1002 by providing spoken input. Thus, in response to assistant's 1002 spoken message providing options for interacting with text message 577, the user may say "Change it". Assistant 1002 recognizes the spoken text and responds with a verbal message prompting the user to speak the revised message. For example, assistant 1002 may say, "OK... What would you like the message to say?" and then starts listening for the user's response. Fig. 6B depicts an example of a screen 570 that might be shown in connection with such a spoken prompt. Again, the user's spoken text is visually echoed 771, along with assistant's 1002 prompt 772.

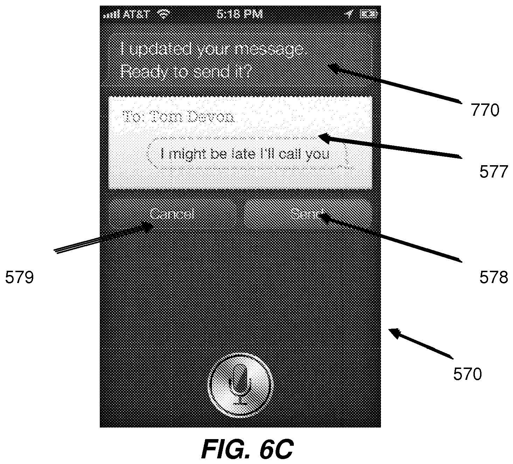

In one embodiment, once the user has been prompted in this manner, the exact contents of the user's subsequent spoken input is interpreted as content for the text message, bypassing the normal natural language interpretation of user commands. User's spoken input is assumed to be complete either when a pause of sufficient length in the input is detected, or upon detection of a specific word indicating the input is complete, or upon detection that the user has pressed a button or activated some other command to indicate that he or she has finished speaking the text message. In one embodiment, assistant 1002 then repeats back the input text message in spoken form, and may optionally echo it as shown in Fig. 6C. Assistant 1002 offers a spoken prompt, such as "Are you ready to send it?", which may also be echoed 770 on the screen as shown in Fig. 6C. The user can then reply by saying "cancel", "send", "yes", or "no", any of which are correctly interpreted by assistant 1002. Alternatively, the user can press a button 578 or 579 on the screen to invoke the desired operation.

By providing a mechanism for modifying text message 577 in this manner, the system of the present invention, in one embodiment, provides a flow path appropriate to a hands-free context, which is integrated with a hands-on approach so that the user can freely choose the mode of interaction at each stage. Furthermore, in one embodiment assistant 1002 adapts its natural language processing mechanism to particular steps in the overall flow; for example, as described above, in some situations assistant 1002 may enter a mode where it bypasses normal natural language interpretation of user commands when the user has been prompted to speak a text message.

### Method

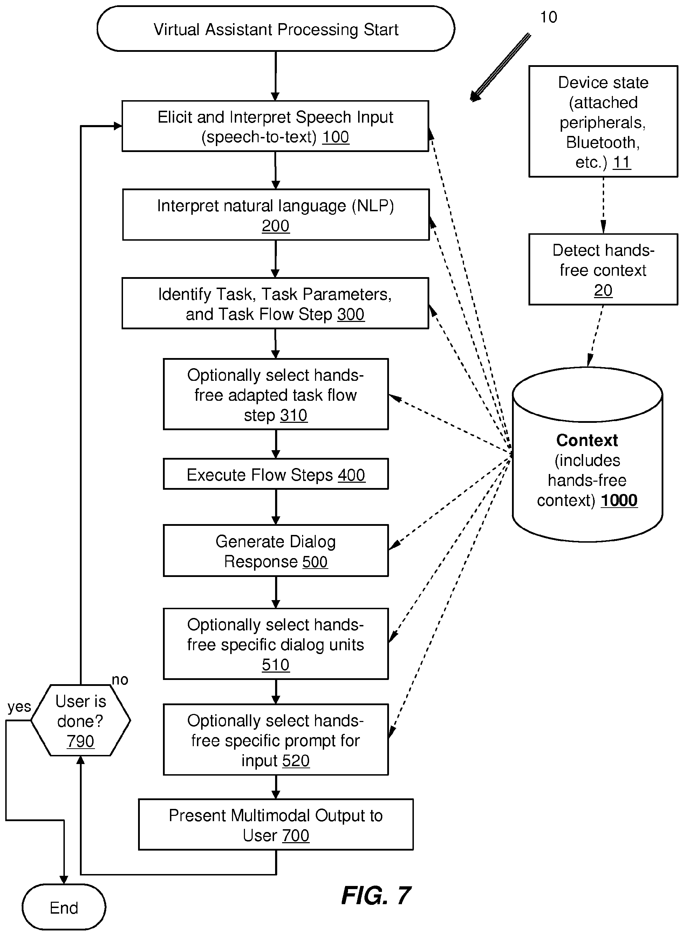

In one embodiment, multimodal virtual assistant 1002 detects a hands-free context and adapts one or more stages of its operation to modify the user experience for hands-free operation. As described above, detection of the hands-free context can be applied in a variety of ways to affect the operation of multimodal virtual assistant 1002. Referring now to Fig. 7, there is shown a flow diagram depicting a method 10 of operation of virtual assistant 1002 that supports dynamic detection of and adaptation to a hands-free context, according to one embodiment. Method 10 may be implemented in connection with one or more embodiments of multimodal virtual assistant 1002. As depicted in Fig. 7, the hands-free context can be used at various stages of processing in multimodal virtual assistant 1002, according to one embodiment.

In at least one embodiment, method 10 may be operable to perform and/or implement various types of functions, operations, actions, and/or other features such as, for example, one or more of the following (or combinations thereof):
- Execute an interface control flow loop of a conversational interface between the user and multimodal virtual assistant 1002. At least one iteration of method 10 may serve as a ply in the conversation. A conversational interface is an interface in which the user and assistant 1002 communicate by making utterances back and forth in a conversational manner.
- Provide executive control flow for multimodal virtual assistant 1002. That is, the procedure controls the gathering of input, processing of input, generation of output, and presentation of output to the user.
- Coordinate communications among components of multimodal virtual assistant 1002. That is, it may direct where the output of one component feeds into another, and where the overall input from the environment and action on the environment may occur.

In at least some embodiments, portions of method 10 may also be implemented at other devices and/or systems of a computer network.

According to specific embodiments, multiple instances or threads of method 10 may be concurrently implemented and/or initiated via the use of one or more processors 63 and/or other combinations of hardware and/or hardware and software. In at least one embodiment, one or more or selected portions of method 10 may be implemented at one or more client(s) 1304, at one or more server(s) 1340, and/or combinations thereof.

For example, in at least some embodiments, various aspects, features, and/or functionalities of method 10 may be performed, implemented and/or initiated by software components, network services, databases, and/or the like, or any combination thereof.

According to different embodiments, one or more different threads or instances of method 10 may be initiated in response to detection of one or more conditions or events satisfying one or more different types of criteria (such as, for example, minimum threshold criteria) for triggering initiation of at least one instance of method 10. Examples of various types of conditions or events which may trigger initiation and/or implementation of one or more different threads or instances of the method may include, but are not limited to, one or more of the following (or combinations thereof):
- a user session with an instance of multimodal virtual assistant 1002, such as, for example, but not limited to, one or more of:
   ∘ a mobile device application starting up, for instance, a mobile device application that is implementing an embodiment of multimodal virtual assistant 1002;
   ∘ a computer application starting up, for instance, an application that is implementing an embodiment of multimodal virtual assistant 1002;
   ∘ a dedicated button on a mobile device pressed, such as a "speech input button";
   ∘ a button on a peripheral device attached to a computer or mobile device, such as a headset, telephone handset or base station, a GPS navigation system, consumer appliance, remote control, or any other device with a button that might be associated with invoking assistance;
   ∘ a web session started from a web browser to a website implementing multimodal virtual assistant 1002;
   ∘ an interaction started from within an existing web browser session to a website implementing multimodal virtual assistant 1002, in which, for example, multimodal virtual assistant 1002 service is requested;
   ∘ an email message sent to a modality server 1426 that is mediating communication with an embodiment of multimodal virtual assistant 1002;
   ∘ a text message is sent to a modality server 1426 that is mediating communication with an embodiment of multimodal virtual assistant 1002;
   ∘ a phone call is made to a modality server 1434 that is mediating communication with an embodiment of multimodal virtual assistant 1002;
   ∘ an event such as an alert or notification is sent to an application that is providing an embodiment of multimodal virtual assistant 1002.
- when a device that provides multimodal virtual assistant 1002 is turned on and/or started.

According to different embodiments, one or more different threads or instances of method 10 may be initiated and/or implemented manually, automatically, statically, dynamically, concurrently, and/or combinations thereof. Additionally, different instances and/or embodiments of method 10 may be initiated at one or more different time intervals (e.g., during a specific time interval, at regular periodic intervals, at irregular periodic intervals, upon demand, and the like).

In at least one embodiment, a given instance of method 10 may utilize and/or generate various different types of data and/or other types of information when performing specific tasks and/or operations, including detection of a hands-free context as described herein. Data may also include any other type of input data/information and/or output data/information. For example, in at least one embodiment, at least one instance of method 10 may access, process, and/or otherwise utilize information from one or more different types of sources, such as, for example, one or more databases. In at least one embodiment, at least a portion of the database information may be accessed via communication with one or more local and/or remote memory devices. Additionally, at least one instance of method 10 may generate one or more different types of output data/information, which, for example, may be stored in local memory and/or remote memory devices.

In at least one embodiment, initial configuration of a given instance of method 10 may be performed using one or more different types of initialization parameters. In at least one embodiment, at least a portion of the initialization parameters may be accessed via communication with one or more local and/or remote memory devices. In at least one embodiment, at least a portion of the initialization parameters provided to an instance of method 10 may correspond to and/or may be derived from the input data/information.

In the particular example of Fig. 7, it is assumed that a single user is accessing an instance of multimodal virtual assistant 1002 over a network from a client application with speech input capabilities. In one embodiment, assistant 1002 is installed on device 60 such as a mobile computing device, personal digital assistant, mobile phone, smartphone, laptop, tablet computer, consumer electronic device, music player, or the like. Assistant 1002 operates in connection with a user interface that allows users to interact with assistant 1002 via spoken input and output as well as direct manipulation and/or display of a graphical user interface (for example via a touchscreen).

Device 60 has a current state 11 that can be analyzed to detect 20 whether it is in a hands-free context. A hands-free context can be detected 20, based on state 11, using any applicable detection mechanism or combination of mechanisms, whether automatic or manual. Examples are set forth above.

When hands-free context is detected 20, that information is added to other contextual information 1000 that may be used for informing various processes of the assistant, as described in related U.S. Utility Application US20120265528, entitled "Using Context Information to Facilitate Processing of Commands in a Virtual Assistant", filed September 30, 2011.

Speech input is elicited and interpreted 100. Elicitation may include presenting prompts in any suitable mode. Thus, depending on whether or not hands-free context is detected, in various embodiments, assistant 1002 may offer one or more of several modes of input. These may include, for example:
- an interface for typed input, which may invoke an active typed-input elicitation procedure;
- an interface for speech input, which may invoke an active speech input elicitation procedure.
- an interface for selecting inputs from a menu, which may invoke active GUI-based input elicitation.

For example, if a hands-free context is detected, speech input may be elicited by a tone or other audible prompt, and the user's speech may be interpreted as text. One skilled in the art will recognize, however, that other input modes may be provided.

The output of step 100 may be a set of candidate interpretations of the text of the input speech. This set of candidate interpretations is processed 200 by language interpreter 2770 (also referred to as a natural language processor, or NLP), which parses the text input and generates a set of possible semantic interpretations of the user's intent.

In step 300, these representation(s) of the user's intent is/are passed to dialog flow processor 2780, which implements an embodiment of a dialog and flow analysis procedure to operationalize the user's intent as task steps. Dialog flow processor 2780 determines which interpretation of intent is most likely, maps this interpretation to instances of domain models and parameters of a task model, and determines the next flow step in a task flow. If appropriate, one or more task flow step(s) adapted to hands-free operation is/are selected 310. For example, as described above, the task flow step(s) for modifying a text message may be different when hands-free context is detected.

In step 400, the identified flow step(s) is/are executed. In one embodiment, invocation of the flow step(s) is performed by services orchestration component 2782, which invokes a set of services on behalf of the user's request. In one embodiment, these services contribute some data to a common result.

In step 500, a dialog response is generated. In one embodiment, dialog response generation 500 is influenced by the state of hands-free context. Thus, when hands-free context is detected, different and/or additional dialog units may be selected 510 for presentation using the audio channel. For example, additional prompts such as "Ready to send it?" may be spoken verbally and not necessarily displayed on the screen. In one embodiment, the detection of hands-free context can influence the prompting for additional input 520, for example to verify input.

In step 700, multimodal output (which, in one embodiment includes verbal and visual content) is presented to the user, who then can optionally respond again using speech input.

If, after viewing and/or hearing the response, the user is done 790, the method ends. If the user is not done, another iteration of the loop is initiated by returning to step 100.

As described herein, context information 1000, including a detected hands-free context, can be used by various components of the system to influence various steps of method 10. For example, as depicted in Fig. 7, context 1000, including hands-free context, can be used at steps 100, 200, 300, 310, 500, 510, and/or 520. One skilled in the art will recognize, however, that the use of context information 1000, including hands-free context, is not limited to these specific steps, and that the system can use context information at other points as well, without departing from the essential characteristics of the present invention. Further description of the use of context 1000 in the various steps of operation of assistant 1002 is provided in related U.S. Utility Application US20120265528, entitled "Using Context Information to Facilitate Processing of Commands in a Virtual Assistant", filed September 30, 2011, and in related U.S. Utility Application US20100312547 for "Contextual Voice Commands", filed June 5, 2009.

In addition, one skilled in the art will recognize that different embodiments of method 10 may include additional features and/or operations than those illustrated in the specific embodiment depicted in Fig. 7, and/or may omit at least a portion of the features and/or operations of method 10 as illustrated in the specific embodiment of Fig. 7.

Adaptation of steps 100, 200, 300, 310, 500, 510, and/or 520 to a hands-free context is described in more detail below.

### Adapting Input Elicitation and Interpretation 100 to Hands-Free Context

Elicitation and interpretation of speech input 100 can be adapted to a hands-free context in any of several ways, either singly or in any combination. As described above, in one embodiment, if a hands-free context is detected, speech input may be elicited by a tone and/or other audible prompt, and the user's speech is interpreted as text. In general, multimodal virtual assistant 1002 may provide multiple possible mechanisms for audio input (such as, for example, Bluetooth-connected microphones or other attached peripherals), and multiple possible mechanisms for invoking assistant 1002 (such as, for example, pressing a button on a peripheral or using a motion gesture in proximity to device 60). The information about how assistant 1002 was invoked and/or which mechanism is being used for audio input can be used to indicate whether or not hands-free context is active and can be used to alter the hands-free experience. More particularly, such information can be used to direct step 100 to use a particular audio path for input and output.

In addition, when hands-free context is detected, the manner in which audio input devices are used can be changed. For example, in a hands-on mode, the interface can require that the user press a button or make a physical gesture to cause assistant 1002 to start listening for speech input. In hands-free mode, by contrast, the interface can continuously prompt for input after every instance of output by assistant 1002, or can allow continuous speech in both directions (allowing the user to interrupt assistant 1002 while assistant 1002 is still speaking).

### Adapting Natural Language Processing 200 to Hands-Free Context

Natural Language Processing (NLP) 200 can be adapted to a hands-free context, for example, by adding support for certain spoken responses that are particularly well-suited to hands-free operation. Such responses can include, for example, "yes", "read the message" and "change it". In one embodiment, support for such responses can be provided in addition to support for spoken commands that are usable in a hands-on situation. Thus, for example, in one embodiment, a user may be able to operate a graphical user interface by speaking a command that appears on a screen (for example, when a button labeled "Send" appears on the screen, support may be provided for understanding the spoken word "send" and its semantic equivalents). In a hands-free context, additional commands can be recognized to account for the fact that the user may not be able to view the screen.

Detection of a hands-free context can also alter the interpretation of words by assistant 1002. For example, in a hands-free context, assistant 1002 can be tuned to recognize the command "quiet!" and its semantic variants, and to turn off all audio output in response to such a comment. In a non-hands-free context, such a command might be ignored as not relevant.

### Adapting Task Flow 300 to Hands-Free Context

Step 300, which includes identifying task(s) associated with the user's intent, parameter(s) for the task(s) and/or task flow steps 300 to execute, can be adapted for hands-free context in any of several ways, singly or in combination.

In one embodiment, one or more additional task flow step(s) adapted to hands-free operation is/are selected 310 for operation. Examples include steps to review and confirm content verbally. In addition, in a hands-free context, assistant 1002 can read lists of results that would otherwise be presented on a display screen. Verbal commands can be provided for interacting with individual items in the list. For example, if several incoming text messages are to be presented to the user, and a hands-free context is detected, then identified task flow steps can include reading aloud each text message individually, and pausing after each message to allow the user to provide a spoken command.

In one embodiment, task flows can be modified for hands-free context. For example, the task flow for taking notes in a notes application might normally involve prompting for content and immediately adding it to a note. Such an operation might be appropriate in a hands-on environment in which content is immediately shown in the visual interface and immediately available for modification by direct manipulation. However, when a hands-free context is detected, the task flow can be modified, for example to verbally review the content and allow for modification of content before it is added to the note. This allows the user to catch speech dictation errors before they are stored in the permanent document.

In one embodiment, hands-free context can also be used to limit the tasks that are allowed at a given time. For example, a policy can be implemented to disallow the playing videos when the user's device is in hands-free context, or a specific hands-free context such as driving a vehicle.

In one embodiment, assistant 1002 can make available entire domains of discourse and/or tasks that are only applicable in a hands-free context. Examples include accessibility modes such as those designed for people with limited eyesight or limited use of their hands. These accessibility modes include commands that are implemented as hands-free alternatives for operating an arbitrary GUI on a given application platform, for example to recognize commands such as "press the button" or "scroll up" are. Other tasks that are may be applicable only in hands-free modes include tasks related to the hands-free experience itself, such as "use my car's Bluetooth kit" or "slow down [the Text to Speech Output]".

### Adapting Dialog Generation 500 to Hands-Free Context

In various embodiments, any of a number of techniques can be used for modifying dialog generation 500 to adapt to a hands-free context.

In a hands-on interface, assistant's 1002 interpretation of the user's input can be echoed in writing; however such feedback may not be visible to the user when in a hands-free context. Thus, in one embodiment, when a hands-free context is detected, assistant 1002 uses Text-to-Speech (TTS) technology to paraphrase the user's input. Such paraphrasing can be selective; for example, prior to sending a text message, assistant 1002 can speak the text message so that a user can verify its contents even if he or she cannot see the display screen.

The determination as to when to paraphrase the user's speech, and which parts of the speech to paraphrase, can be driven by task- and/or flow-specific dialogs. For example, in response to a user's spoken command such as "read my new message", in one embodiment assistant 1002 does not paraphrase the command, since it is evident from assistant's 1002 response (reading the message) that the command was understood. However, in other situations, such as when the user's input is not recognized in step 100 or understood in step 200, assistant 1002 can attempt to paraphrase the user's spoken input so as to inform the user why the input was not understood. For example, assistant 1002 might say "I didn't understand 'reel my newt massage'. Please try again."

In one embodiment, the verbal paraphrase of information can combine dialog templates with personal data on a device. For example, when reading a text message, in one embodiment assistant 1002 uses a spoken output template with variables of the form, "You have a new message from $person. It says $message." The variables in the template can be substituted with user data and then turned into speech by a process running on device 60. In one embodiment wherein the invention is implemented in a client/server environment, such a technique can help protect the privacy of users while still allowing personalization of output, since the personal data can remain on device 60 and can be filled in upon receipt of an output template from the server.

In one embodiment, when hands-free context is detected, different and/or additional dialog units specifically tailored to hands-free contexts may be selected 510 for presentation using the audio channel. The code or rules for determining which dialog units to select can be sensitive to the particulars of the hands-free context. In this manner, a general dialog generation component can be adapted and extended to support various hands-free variations without necessarily building a separate user experience for different hands-free situations.

In one embodiment, the same mechanism that generates text and GUI output units can be annotated with texts that are tailored for an audio (spoken word) output modality. For example:
- In one embodiment, a dialog generation component can be adapted for a hands-free context by reading all of its written dialog responses using TTS.
- In one embodiment, a dialog generation component can be adapted for a hands-free context by reading some of its written dialog responses verbatim over TTS, and using TTS variants for other dialog responses.
- In one embodiment, such annotations support a variable substitution template mechanism which segregates user data from dialog generation.
- In one embodiment, graphical user interface elements can be annotated with text that indicates how they should be verbally paraphrased over TTS.
- In one embodiment, TTS texts can be tuned so that the voice, speaking rate, pitch, pauses, and/or other parameters are used to convey verbally what would otherwise be conveyed in punctuation or visual rendering. For example, the voice that is used when repeating back the user's words can be a different voice, or can use different prosody, than that used for other dialog units. As another example, the voice and/or prosody can differ depending on whether content or instructions are being spoken. As another example, pauses can be inserted between sections of text with different meanings, to aid in understanding. For example, when paraphrasing a message and asking for confirmation, a pause might be inserted between the paraphrase of the content "Your message reads ..." and the prompt for confirmation "Ready to send it?"

In one embodiment, non-hands free contexts can be enhanced using similar mechanisms of using TTS as described above for hands-free contexts. For example, a dialog can generate verbal-only prompts in addition to written text and GUI elements. For example, in some situations, assistant 1002 can say, verbally, "Shall I send it?" to augment the on-screen display of a Send button. In one embodiment, the TTS output used for both hands-free and non-hands-free contexts can be tailored for each case. For example, assistant 1002 may use longer pauses when in the hands-free context.

In one embodiment, the detection of hands-free context can also be used to determine whether and when to automatically prompt the user for a response. For example, when interaction between assistant 1002 and user is synchronous in nature, so that one party speaks while the other listens, a design choice can be made as to whether and when assistant 1002 should automatically start listening for a speech input from the user after assistant 1002 has spoken. The specifics of the hands-free context can be used to implement various policies for this auto-start-listening property of a dialog. Examples include, without limitation:
- Always auto-start-listening;
- Only auto-start-listening when in a hands-free context;
- Only auto-start-listening for certain task flow steps and dialog states;
- Only auto-start-listening for certain task flow steps and dialog states in a hands-free context.

In other embodiments, detection of a hands-free context can also affect choices with regard to other parameters of a dialog, such as, for example:
- the length of lists of options to offer the user;
- whether to read lists;
- whether to ask questions with single or multiple valued answers;
- whether to prompt for data that can only be given using a direct manipulation interface;

Thus, in various embodiments, a hands-free context, once detected, is a system-side parameter that can be used to adapt various processing steps of a complex system such as multimodal virtual assistant 1002. The various methods described herein provide ways to adapt general procedures of assistant 1002 for hands-free contexts to support a range of user experiences from the same underlying system.

Various mechanisms for gathering, communicating, representing, and accessing context are described in related U.S. Utility Application US20120265528, entitled "Using Context Information to Facilitate Processing of Commands in a Virtual Assistant", filed September 30, 2011. One skilled in the art will recognize that such techniques are applicable to hands-free context as well.

### Use Cases

The following use cases are presented as examples of operation of assistant 1002 in a hands-free context. One skilled in the art will recognize that the use cases are exemplary, and are presented for illustrative purposes only.

### Phone Use Cases

In one embodiment, when in a hands-free context, assistant 1002 allows the user to can call anyone if the user can specify the person to be called without tapping or otherwise touching the device. Examples include calling by contact name, calling by phone number (digits recited by user), and the like. Ambiguity can be resolved by additional spoken prompts. Examples are shown below.

### Example 1: Call a contact, unambiguous

- User's spoken input: "Call Adam Smith"
- Assistant's 1002 spoken output: "Calling Adam Smith, mobile."
- Call is placed

Similar interaction would take place for any of the following use cases:
- Call contact by Name ("call adam smith")
- Call contact by Name, non-default phone number ("call adam smith mobile")
- Call by Number ("call 800 555 1212")
- Call contact by Relationship Alias ("call my mom")
- Call contact by Location Alias ("phone home")
- Call via FaceTime ("facetime adam smith")
- Call back from context ("call him back")

### Example 2: Cancel a phone call

- User's spoken input: "Call Adam Smith"
- Assistant's 1002 spoken output: "Calling Adam Smith, mobile."
- User notes this is the wrong person to call; user single-presses home button to cancel the call, or says "Stop"
- Call is canceled

### Example 3: Call by name, ambiguous

- User's spoken input: "Call Adam"
- Assistant's 1002 spoken output: "I found multiple matches for <voice change> Adam"
- Assistant's 1002 visual output: "I found multiple matches for <voice change> Adam"
- Assistant's 1002 spoken output: Read names
- Assistant's 1002 visual output:

### Disambiguation Menu

Adam Cheyer home
Adam Sandler home
Adam Smith mobile
- User's spoken input: "Adam Cheyer"
- Assistant's 1002 spoken output: "Calling Adam Cheyer "
- Call is placed

### Example 4: Call by name, doubly ambiguous

- User's spoken input: "Call Paul"
- Assistant's 1002 spoken output: "I found multiple matches for <voice change> Paul"
- Assistant's 1002 visual output: "I found multiple matches for <voice change> Paul"
- Assistant's 1002 spoken output: Read names
- Assistant's 1002 visual output:

### Disambiguation Menu

Paul Holden home
Paul Marcos iPhone
Paul Marcos mobile
Paul Marcos home
Pablo Picasso home
- User's spoken input: "Paul Marcos"
- Assistant's 1002 spoken output: "Which number for Paul Marcos: iPhone, mobile, or home?"
- Assistant's 1002 visual output: "Which number for Paul Marcos?"
- Assistant's 1002 visual output:

### Disambiguation Menu

Paul Marcos iPhone
Paul Marcos mobile
Paul Marcos home
- User's spoken input: "mobile"
- Assistant's 1002 spoken output: "Calling Paul Marcos <pause> mobile"
- Call is placed

### Example 5: Call a business by name, no ambiguity

- User's spoken input: "Call the sony metreon in san francisco"
- Assistant's 1002 spoken output: "I found AMC Loews Metreon 16 on Fourth Street"
- Assistant's 1002 visual output: "I found AMC Loews Metreon 16 on Fourth Street"
- Assistant's 1002 visual output:

### Local Search Snippet

AMC Loews Metreon 16
101 Fourth St, San Francisco
(888) 262-4386
<Cancel button> <Call button>
- Assistant's 1002 spoken output: "Shall I place the call?"
- User's spoken input: "Call it"
- Assistant's 1002 spoken output: "Calling AMC Loews Metreon 16"
- Call is placed

### Example 6: Call a business by name, multiple matches

- User's spoken input: "Call walgreens"
- Assistant's 1002 spoken output: "I found several matches for <change voice> Walgreens "
- Assistant's 1002 visual output: "I found several matches for <change voice> Walgreens "
- Assistant's 1002 visual output:

### List of Local Search Snippets

### Walgreens Store Los Gatos

423 N Santa Cruz Ave, Los Gatos

### Walgreens

1570 Campbell Ave, Campbell, CA

### Walgreens

20011 Bollinger Rd, Cupertino, CA

### Walgreens

1334 Saratoga Ave, San Jose, CA

### Walgreens

2680 Union Ave, San Jose, CA
- Assistant's 1002 spoken output: "Shall I read them to you?"
- User's spoken input: "yes"
- Assistant's 1002 spoken output: "Walgreens store los gatos on 423 North Santa Cruz Avenue in Los Gatos <pause> 2. Walgreens on 1570 Campbell Avenue in Campbell <pause> 3. ...""
- User's spoken input: "the one in Cupertino"
- Assistant's 1002 spoken output: "Calling Walgreens in Cupertino"
- Call is placed

### Example 6: Make scheduled calls in car

- User starts driving home
- Assistant 1002 issues tone of an In Car Reminder
- Assistant's 1002 visual output:

### Reminder Alert

Call Adam Smith
<Close button> <Call button>
- User's spoken input: "Read it"
- Assistant's 1002 spoken output: "You have a reminder to call Adam Smith"
- User's spoken input: "Call him now"
- Assistant's 1002 spoken output: "Calling Adam Smith, mobile"
- Call is placed

### Example 7: Play new voicemails

- User's spoken input: "play voicemail"
- Assistant's 1002 spoken output: "You have three new voice mail messages"
- Assistant 1002 plays voicemails, one at a time, with prompts"

### SMS Text Messaging Use Cases

### Example 8: Read a single text message alert

- Assistant's 1002 audio output: Reads the alert or alerts; or generates sound indicating incoming text message
- Assistant's 1002 visual output:

### Text Message

Mary Richards
Are you free for dinner tonight?
   <Close button> <Reply button>
   - User's spoken input: "read it"
   - Assistant's 1002 spoken output: "Message from Mary Richards <change of voice> are you free for dinner tonight?"

### Example 9: Reply to text message (continues from Example 8)

- User's spoken input: "reply <pause> sure, how about 8?"
- Assistant's 1002 spoken output: "Ready to reply to Mary Richards with the message <change of voice> sure how about 8"
- Assistant's 1002 visual output:

### To: Mary Richards

sure how about 8
<Cancel button> <Send button>
- User's spoken input: "send it"
- Assistant's 1002 audio output: "Sending"; or generates outgoing text message sound

### Example 10: Send a text message to one recipient

- User's spoken input: "Tell Lisa that I'll be 15 minutes late"
- Assistant's 1002 spoken output: "Ready to send a text to Lisa Gonzalez with the message <change of voice> I'll be 15 minutes late"
- Assistant's 1002 visual output:

### Text Message

To: Lisa Gonzalez
I'll be 15 minutes late
   <Cancel button> <Send button>
   - User's spoken input: "send it"
   - Assistant's 1002 audio output: "Sending"; or generates outgoing text message sound

### Example 11: Send a text message to one recipient - ambiguous

- User's spoken input: "text to Adam with message Where is the meeting?"
- Assistant's 1002 spoken output: "I found multiple matches for <voice change> Adam"
- Assistant's 1002 spoken output: Read names
- Assistant's 1002 visual output:

### Disambiguation Menu

Adam Cheyer home
Adam Sandler home
Adam Smith mobile
- User's spoken input: "Adam Cheyer"
- Assistant's 1002 spoken output: "Adam Cheyer"
- Assistant's 1002 visual output:

### Text Message

To: Adam Cheyer
Where is the meeting?
<Cancel button> <Send button>
- Assistant's 1002 spoken output: "Ready to send a text to Adam Cheyer with the message <change of voice> Where is the meeting?"
- User's spoken input: "send it"
- Assistant's 1002 audio output: "Sending"; or generates outgoing text message sound

### Example 12: Read an SMS message from Messages app

- Assistant's 1002 visual output:

### Text Message

Betty Joe Bialowski
You can call me Nancy
<Close button> <Reply button>
- User's spoken input: "read it"
- Assistant's 1002 spoken output: "Message from Betty Joe Bialowski <change voice> you can call me nancy"

### Example 13: Reply in context of Messages App (continues from Example 12)

- User's spoken input: "reply <pause> Hi Nancy"
- Assistant's 1002 spoken output: "Ready to reply to Betty Joe Bialowski with the message <change of voice> Hi Nancy "
- Assistant's 1002 visual output:

### To: Betty Joe Bialowski

Hi Nancy
<Cancel button> <Send button>
- User's spoken input: "send it"
- Assistant's 1002 audio output: "Sending"; or generates outgoing text message sound

### Example 14: Read all unread SMS messages

- Assistant's 1002 visual output:
   Melanie Haber (1)
   Betty Joe Bialowski (3)
   Audrey Farber (1)
- User's spoken input: "Read my new messages"
- Assistant's 1002 spoken output: "You have 4 new messages. From Melanie Haber <change voice> How about dinner? <pause> From Betty Joe Bialowski, you have 2 messages. <pause> 1. <change voice> My name is MacGill. <pause> 2. <change voice> I call myself Lill. "<pause> 3. <change voice> you can call me nancy"

### Example 15: Reply by name in context of Messages App

- User's spoken input: "Tell Audrey that I'll be 15 minutes late"
- Assistant's 1002 spoken output: "Ready to send a text to Audrey Farber with the message <change of voice> I'll be 15 minutes late"
- Assistant's 1002 visual output:

### Text Message

To: Audrey Farber
I'll be 15 minutes late
<Cancel button> <Send button>
- Assistant's 1002 spoken output: "Shall I send it?"
- User's spoken input: "yes"
- Assistant's 1002 audio output: "Sending"; or generates outgoing text message sound

### Example 16: Send a text message to multiple recipient

In one embodiment, this task is determined to be out of scope for hands-free context. Accordingly, assistant 1002 reverts to tapping for disambiguation.
- User's spoken input: "Tell Lisa, Paul, and Nancy that I'll be 15 minutes late to our important meeting"
- Assistant's 1002 spoken output: "Please select among these people"
- Assistant's 1002 visual output: GUI to select multiple recipients
- User selects recipients via GUI
- Assistant's 1002 spoken output: "Ready to send a text to Lisa Gonzalez, Paul Marcos, and Audrey Farber with the message <change of voice> I'll be 15 minutes late to our important meeting"
- Assistant's 1002 visual output:

### Text Message

To: Lisa Gonzalez, Paul Marcos, Audrey Farber
I'll be 15 minutes late to our important meeting
<Cancel button> <Send button>
- User's spoken input: "Send it"
- Assistant's 1002 audio output: "Sending"; or generates outgoing text message sound

### Alerts & Reminders Use Cases

### Example 17: Read a single Reminder alert

- Assistant 1002 issues reminder tone
- Assistant's 1002 visual output:

### Reminders

Call Mary Richards
<Close button> <Call button>
- User's spoken input: "Read it"
- Assistant's 1002 spoken output: "Reminder to call Mary Richards"

### Example 18: Execute Reminder alert (continues from Example 17)

- User's spoken input: "call her"
- Assistant's 1002 spoken output: "Calling Mary Richards, mobile"
- Call is placed

### Example 19: Create a new reminder with alert

- User's spoken input: "Remind me to call Bob Jones at 5pm"
- Assistant's 1002 spoken output: "Please confirm: reminder at 5pm today to <change of voice>call Bob Jones "
- Assistant's 1002 visual output:

### Please confirm Reminder

Call Bob Jones
Reminder time: 5:00pm today
<Cancel> <Save>
- Pause
- Assistant's 1002 spoken output: "Is this correct?"
- User's spoken input: "yes, save it"
- Assistant's 1002 spoken output: "Your reminder has been saved"

### Example 20: Create a new reminder with no alert P1

- User's spoken input: "Remind me to get bread" or "Remember to get bread"
- Assistant's 1002 spoken output: "Please confirm: remember to get bread"
- Assistant's 1002 visual output:

### Please confirm Reminder

get bread
<Cancel> <Save>
- Pause
- Assistant's 1002 spoken output: "Is this correct?"
- User's spoken input: "yup"
- Assistant's 1002 spoken output: "I added it to your to-do list"

### Calendar Use Cases

### Example 21: Create a simple appointment (description and date/time given)

- User's spoken input: "Schedule a meeting at 2 tomorrow to plan the company picnic"
- Assistant's 1002 spoken output: "I put it on your calendar for 2PM tomorrow"
- Assistant's 1002 visual output:

### description: Plan the company picnic

when: tomorrow at 2PM

### Example 22: Create a simple appointment (no description given)

- User's spoken input: "Meet with Carol at 2 tomorrow"
- Assistant's 1002 spoken output: "I put it on your calendar for 2PM tomorrow"
- Assistant's 1002 visual output:

### description: Meeting

when: tomorrow at 2PM

### Example 23: Create a simple appointment (no time given)

- User's spoken input: "Dentist appointment next Thursday"
- Assistant's 1002 spoken output: "What time next Thursday?"
- User's spoken input: "3 o'clock"
- Assistant's 1002 spoken output: "I put it on your calendar for 3PM next Thursday "
- Assistant's 1002 visual output:

### description: Dentist appointment

when: next Thursday - 3pm

### Example 24: Create a simple appointment (no date or time given)

- User's spoken input: "Schedule a meeting to plan the company picnic"
- Assistant's 1002 spoken output: "When would you like to have the meeting?"
- Assistant's 1002 visual output: editable appointment form
- User's spoken input: "Tuesday at 3 o'clock"
- Assistant's 1002 spoken output: "I put it on your calendar for 3PM on Tuesday "
- Assistant's 1002 visual output:

### description: meeting to plan the company picnic

when: Tuesday - 3pm

One skilled in the art will recognize that the above examples are merely illustrative of the use of hands-free context in particular situations. Additional uses include, for example, maps, playing media such as music, and the like.

The present invention has been described in particular detail with respect to possible embodiments. Those of skill in the art will appreciate that the invention may be practiced in other embodiments. First, the particular naming of the components, capitalization of terms, the attributes, data structures, or any other programming or structural aspect is not mandatory, and the mechanisms that implement the invention or its features may have different names, formats, or protocols. Further, the system may be implemented via a combination of hardware and software, as described, or entirely in hardware elements, or entirely in software elements. Also, the particular division of functionality between the various system components described herein is merely exemplary, and not mandatory; functions performed by a single system component may instead be performed by multiple components, and functions performed by multiple components may instead be performed by a single component.

In various embodiments, the present invention can be implemented as a device or a method for performing the above-described techniques,. In another embodiment, the present invention can be implemented as a computer program product comprising a nontransitory computer-readable storage medium and computer program code, encoded on the medium, for causing a processor in a computing device or other electronic device to perform the above-described techniques.

. The appearances of the phrase "in one embodiment" in various places in the specification are not necessarily all referring to the same embodiment.

Some portions of the above are presented in terms of algorithms and symbolic representations of operations on data bits within a memory of a computing device. These algorithmic descriptions and representations are the means used by those skilled in the data processing arts to most effectively convey the substance of their work to others skilled in the art. An algorithm is here, and generally, conceived to be a self-consistent sequence of steps (instructions) leading to a desired result. The steps are those requiring physical manipulations of physical quantities. Usually, though not necessarily, these quantities take the form of electrical, magnetic or optical signals capable of being stored, transferred, combined, compared and otherwise manipulated. It is convenient at times, principally for reasons of common usage, to refer to these signals as bits, values, elements, symbols, characters, terms, numbers, or the like. Furthermore, it is also convenient at times, to refer to certain arrangements of steps requiring physical manipulations of physical quantities as modules or code devices, without loss of generality.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "displaying" or "determining" or the like, refer to the action and processes of a computer system, or similar electronic computing module and/or device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention can be embodied in software, firmware and/or hardware, and when embodied in software, can be downloaded to reside on and be operated from different platforms used by a variety of operating systems.

The present invention also relates to an apparatus for performing the operations herein. This apparatus may be specially constructed for the required purposes, or it may comprise a general-purpose computing device selectively activated or reconfigured by a computer program stored in the computing device. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Further, the computing devices referred to herein may include a single processor or may be architectures employing multiple processor designs for increased computing capability.

The algorithms and displays presented herein are not inherently related to any particular computing device, virtualized system, or other apparatus. Various general-purpose systems may also be used with programs in accordance with the teachings herein, or it may prove convenient to construct more specialized apparatus to perform the required method steps. The required structure for a variety of these systems will be apparent from the description provided herein. In addition, the present invention is not described with reference to any particular programming language. It will be appreciated that a variety of programming languages may be used to implement the teachings of the present invention as described herein, and any references above to specific languages are provided for disclosure of enablement and best mode of the present invention.

Accordingly, in various embodiments, the present invention can be implemented as software, hardware, and/or other elements for controlling a computer system, computing device, or other electronic device, or any combination or plurality thereof. Such an electronic device can include, for example, a processor, an input device (such as a keyboard, mouse, touchpad, trackpad, joystick, trackball, microphone, and/or any combination thereof), an output device (such as a screen, speaker, and/or the like), memory, long-term storage (such as magnetic storage, optical storage, and/or the like), and/or network connectivity, according to techniques that are well known in the art. Such an electronic device may be portable or non-portable. Examples of electronic devices that may be used for implementing the invention include: a mobile phone, personal digital assistant, smartphone, kiosk, desktop computer, laptop computer, tablet computer, consumer electronic device, consumer entertainment device; music player; camera; television; set-top box; electronic gaming unit; or the like. An electronic device for implementing the present invention may use any operating system such as, for example, iOS or MacOS, available from Apple Inc. of Cupertino, California, or any other operating system that is adapted for use on the device.

## Claims

1. A computer-implemented method for interpreting user input to perform a task on a computing device having at least one processor, comprising:
at a processor, detecting whether a hands-free mode or a hands-on mode is active;
at an output device, prompting a user for input (100);
at an input device, receiving user input (100);
at the processor, interpreting the received user input to derive a representation of user intent (200), **characterized in that** the interpreting comprises:
interpreting the user input as text;
generating a set of possible candidate interpretations of the text;
parsing the candidate interpretations of the text and generating a set of possible semantic interpretations from the candidate interpretations;
processing the set of possible semantic interpretations to obtain task steps;
determining the representation of user intent from the set of semantic interpretations based on the obtained task steps;
at the processor, identifying at least one task and at least one parameter for the task, based at least in part on the derived representation of user intent (300);
at the processor, executing the at least one task using the at least one parameter, to derive a result (400);
at the processor, in accordance with the derived result and responsive to detection that the device is in a hands-free mode, generating a dialog response based on the derived result (500) in a speech-based output mode comprising paraphrasing at least a portion of the user input in spoken form including generating speech using a plurality of voices to differentiate paraphrased user input from other spoken output; and
at the output device, outputting the generated speech (700);
wherein, responsive to detection that the device is in a hands-free mode (1000), at least one of the steps of prompting the user for input, receiving user input, interpreting the received user input, identifying the at least one task and at least one parameter for the task, and generating the dialog response is performed in a manner consistent with limitations associated with the hands-free mode as compared to the hands-on mode.

2. The method of claim 1, wherein at least two interaction modes are available for user interaction with the computing device, and wherein:
responsive to detection that the device is in a hands-free mode, at least one of the steps of prompting the user for input, receiving user input, interpreting the received user input, identifying the at least one task and at least one parameter for the task, and generating the dialog response is performed using a first interaction mode adapted to hands-free operation; and
responsive to detection that the device is not in a hands-free mode, at least one of the steps of prompting the user for input, received user input, interpreting the receiving user input, identifying the at least one task and at least one parameter for the task, and generating the dialog response is performed using a second interaction mode not adapted to hands-free operation.

3. The method of any of claims 1-2, wherein detecting whether or not a hands-free mode is active comprises detecting a condition selected from the group comprising:
a condition indicating that the computing device is located at a geographical location;
a condition indicating that the current time is within a time of day;
a condition indicating that the computing device is connected with another device;
a condition indicating that the computing device is moving above a threshold speed;
a condition indicating that the device is proximate to a user; and
a condition indicating the presence of a specific word in the received user input.

4. The method of any of claims 1-3, wherein prompting a user for input comprises:
responsive to detection that the device is not in a hands-free mode, prompting the user via a first output mode not adapted to the hands-free mode; and
responsive to detection that the device is in a hands-free mode, prompting the user via a second output mode adapted to the hands-free mode.

5. The method of claim 4, wherein:
prompting the user via a first output mode comprises prompting the user via a visual output mode; and
prompting the user via a second output mode comprises prompting the user via an auditory output mode.

6. The method of claim 5, wherein:
prompting the user via a visual output mode comprises displaying a prompt on a display screen; and
prompting the user via an auditory output mode comprises outputting a spoken prompt.

7. The method of any of claims 1-6, wherein interpreting the received user input comprises:
responsive to detection that the device is in a hands-free mode, interpreting the received user input using a vocabulary associated with hands-free operation.

8. The method of any of claims 1-7, wherein identifying at least one task and at least one parameter for the task comprises, responsive to detection that the device is in a hands- free context, performing at least one task flow identification step associated with hands-free operation.

9. The method of claim 8, wherein performing at least one task flow identification step associated with hands-free operation comprises prompting the user to review and confirm entered content via a speech-based interface.

10. The method of any of claims 8-9, wherein performing at least one task flow identification step associated with hands-free operation comprises performing at least one task flow step using auditory output.

11. The method of any of claims 8-10, wherein performing at least one task flow identification step associated with hands-free operation comprises performing at least one task flow step selected from a limited group of available task flow steps suited to the hands-free mode.

12. The method of any of claims 1-11, wherein generating a dialog response in a speech-based output mode comprises combining a dialog template with at least one item of personal data.

13. The method of claim 1, wherein detecting whether or not a hands-free mode is active comprises at least one process selected from the group consisting of:
receiving user input specifying a hands-free mode;
receiving data from at least one sensor indicating an environmental condition associated with a hands-free mode;
detecting connection of a peripheral device associated with a hands-free mode;
detecting disconnection of a peripheral device not associated with a hands-free mode;
detecting communication with an onboard system of a vehicle;
detecting current location; and
detecting current speed.

14. A computer-readable storage medium, storing one or more programs for execution by one or more processors of an electronic device, the one or more programs including instructions for performing any of the methods of claims 1-13.

15. An electronic device, comprising one or more processors and memory storing one or more programs for execution by the one or more processors, the one or more programs including instructions for performing any of the methods of claims 1-13.

## Patentansprüche

1. Computerimplementiertes Verfahren zum Interpretieren von Benutzereingabe zum Durchführen einer Aufgabe auf einer Rechenvorrichtung mit mindestens einem Prozessor, umfassend:
an einem Prozessor, Erkennen, ob ein Freisprechmodus oder ein manueller Modus aktiv ist;
an einer Ausgabevorrichtung, Auffordern eines Benutzers zur Eingabe (100);
an einer Eingabevorrichtung, Empfangen von Benutzereingabe (100);
an dem Prozessor, Interpretieren der empfangenen Benutzereingabe, um eine Repräsentation der Benutzerabsicht (200) abzuleiten, **dadurch gekennzeichnet, dass** das Interpretieren umfasst:
Interpretieren der Benutzereingabe als Text;
Erzeugen eines Satzes möglicher Kandidateninterpretationen des Textes;
Parsen der Kandidateninterpretationen des Textes und Erzeugen eines Satzes möglicher semantischer Interpretationen aus den Kandidateninterpretationen;
Verarbeiten des Satzes möglicher semantischer Interpretationen, um Aufgabenschritte zu erhalten;
Bestimmen der Repräsentation der Benutzerabsicht basierend auf den erhaltenen Aufgabenschritten;
an dem Prozessor, Identifizieren mindestens einer Aufgabe und mindestens eines Parameters für die Aufgabe, zumindest teilweise basierend auf der abgeleiteten Repräsentation der Benutzerabsicht (300);
an dem Prozessor, Ausführen der mindestens einen Aufgabe unter Verwendung des mindestens einen Parameters, um ein Resultat abzuleiten (400);
an dem Prozessor, in Übereinstimmung mit dem abgeleiteten Ergebnis und in Reaktion auf Erkennung, dass die Vorrichtung sich in einem Freisprechmodus befindet, Erzeugen einer Dialogreaktion basierend auf dem abgeleiteten Resultat (500) in einem sprachbasierten Ausgabemodus, was Paraphrasieren von zumindest einem Abschnitt der Benutzereingabe in gesprochener Form umfasst, einschließlich Erzeugen von Sprache unter Verwendung einer Vielzahl von Stimmen, um paraphrasierte Benutzereingabe von anderer gesprochener Ausgabe zu differenzieren; und
an der Ausgabevorrichtung, Ausgabe der erzeugten Sprache (700);
wobei, in Reaktion auf Erkennen, dass die Vorrichtung sich in einem Freisprechmodus (1000) befindet, mindestens einer der Schritte des Veranlassens des Benutzers zur Eingabe Empfangen von Benutzereingabe, Interpretieren der empfangenen Benutzereingabe, Identifizieren der mindestens einen Aufgabe und mindestens eines Parameters für die Aufgabe und Erzeugen der Dialogreaktion auf eine Weise durchgeführt wird, die mit Einschränkungen übereinstimmt, die dem Freisprechmodus im Vergleich zum manuellen Modus zugeordnet sind.

2. Verfahren nach Anspruch 1, wobei mindestens zwei Interaktionsmodi für Benutzerinteraktion mit der Rechenvorrichtung verfügbar sind, und wobei:
in Reaktion auf Erkennung, dass die Vorrichtung sich in einem Freisprechmodus befindet, mindestens einer der Schritte des Aufforderns des Benutzers zur Eingabe, Empfangen von Benutzereingabe, Interpretieren der empfangenen Benutzereingabe, Identifizieren der mindestens einen Aufgabe und von mindestens einem Parameter für die Aufgabe und Erzeugen der Dialogreaktion unter Verwendung eines ersten Interaktionsmodus durchgeführt wird, der für Freisprechbetrieb ausgelegt ist; und
in Reaktion auf Erkennung, dass sich die Vorrichtung nicht in einem Freisprechmodus befindet, mindestens einer der Schritte des Aufforderns des Benutzers zur Eingabe, empfangener Benutzereingabe, Interpretieren der empfangenen Benutzereingabe, Identifizieren der mindestens einen Aufgabe und von mindestens einem Parameter für die Aufgabe, und Erzeugen der Dialogreaktion unter Verwendung eines zweiten Interaktionsmodus durchgeführt wird, der nicht für Freisprechbetrieb ausgelegt ist.

3. Verfahren nach einem der Ansprüche 1-2, wobei Erkennen, ob Freisprechmodus aktiv ist oder nicht, Erkennen einer Bedingung umfasst, die aus der Gruppe ausgewählt wird, die umfasst:
eine Bedingung, die angibt, dass die Rechenvorrichtung sich an einem geografischen Standort befindet;
eine Bedingung, die angibt, dass die aktuelle Zeit innerhalb einer Tageszeit liegt;
eine Bedingung, die angibt, dass die Rechenvorrichtung mit einer anderen Vorrichtung verbunden ist;
eine Bedingung, die angibt, dass die Rechenvorrichtung sich über einer Schwellenwertgeschwindigkeit bewegt;
eine Bedingung, die angibt, dass die Vorrichtung sich in der Nähe eines Benutzers befindet; und
eine Bedingung, die das Vorhandensein eines spezifischen Wortes in der empfangenen Benutzereingabe angibt.

4. Verfahren nach einem der Ansprüche 1-3, wobei Auffordern eines Benutzers zur Eingabe umfasst:
in Reaktion auf Erkennung, dass die Vorrichtung sich nicht in einem Freisprechmodus befindet, Auffordern des Benutzers über einen ersten Ausgabemodus, der nicht für den Freisprechmodus ausgelegt ist; und
in Reaktion auf Erkennung, dass die Vorrichtung sich in einem Freisprechmodus befindet, Auffordern des Benutzers über einen zweiten Ausgabemodus, der für Freisprechmodus ausgelegt ist.

5. Verfahren nach Anspruch 4, wobei:
Auffordern des Benutzers über einen ersten Ausgabemodus Auffordern des Benutzers über einen visuellen Ausgabemodus umfasst; und
Auffordern des Benutzers über einen zweiten Ausgabemodus Auffordern des Benutzers über einen auditiven Ausgabemodus umfasst.

6. Verfahren nach Anspruch 5, wobei:
Auffordern des Benutzers über einen visuellen Ausgabemodus Anzeigen einer Aufforderung auf einem Anzeigebildschirm umfasst; und
Auffordern des Benutzers über einen auditiven Ausgabemodus Ausgeben einer gesprochenen Aufforderung umfasst.

7. Verfahren nach einem der Ansprüche 1-6, wobei Interpretieren der empfangenen Benutzereingabe umfasst:
in Reaktion auf Erkennung, dass die Vorrichtung sich in einem Freisprechmodus befindet, Interpretieren der empfangenen Benutzereingabe unter Verwendung eines Vokabulars, das Freisprechbetrieb zugeordnet ist.

8. Verfahren nach einem der Ansprüche 1-7, wobei Identifizieren von mindestens einer Aufgabe und von mindestens einem Parameter für die Aufgabe, in Reaktion auf Erkennung, dass sich die Vorrichtung in einem Freisprechkontext befindet, Durchführen mindestens eines Aufgabenablaufidentifikationsschrittes umfasst, der Freisprechbetrieb zugeordnet ist.

9. Verfahren nach Anspruch 8, wobei Durchführen von mindestens einem Aufgabenablaufidentifikationsschritt, der Freisprechbetrieb zugeordnet ist, Auffordern des Benutzers umfasst, eingegebenen Inhalt über eine sprachbasierte Schnittstelle zu prüfen und zu bestätigen.

10. Verfahren nach einem der Ansprüche 8-9, wobei Durchführen von mindestens einem Aufgabenablaufidentifikationsschritt, der Freisprechbetrieb zugeordnet ist, Durchführen mindestens eines Aufgabenablaufschrittes unter Verwendung auditiver Ausgabe umfasst.

11. Verfahren nach einem der Ansprüche 8-10, wobei Durchführen von mindestens einem Aufgabenablaufidentifikationsschritt, der Freisprechbetrieb zugeordnet ist, Durchführen mindestens eines Aufgabenablaufschrittes umfasst, der aus einer begrenzten Gruppe verfügbarer Aufgabenablaufschritte, die für den Freisprechmodus geeignet sind, ausgewählt werden.

12. Verfahren nach einem der Ansprüche 1-11, wobei Erzeugen eines Dialogs in Reaktion auf einen sprachbasierten Ausgabemodus Kombinieren einer Dialogvorlage mit mindestens einem Element persönlicher Daten umfasst.

13. Verfahren nach Anspruch 1, wobei Erkennen, ob Freisprechmodus aktiv ist oder nicht, mindestens einen Prozess umfasst, der aus der Gruppe ausgewählt wird, die besteht aus:
Empfangen von Benutzereingabe, die einen Freisprechmodus spezifiziert;
Empfangen von Daten von mindestens einem Sensor, die eine Umgebungsbedingung angeben, die einem Freisprechmodus zugeordnet ist;
Erkennen einer Verbindung einer Peripherievorrichtung, die einem Freisprechmodus zugeordnet ist;
Erkennen einer Trennung einer Peripherievorrichtung, die einem Freisprechmodus nicht zugeordnet ist;
Erkennen von Kommunikation mit fahrzeugseitigem System eines Fahrzeugs;
Erkennen einer aktuellen Position; und
Erkennen einer aktuellen Geschwindigkeit.

14. Computerlesbares Speichermedium, das ein oder mehrere Programme zur Ausführung durch einen oder mehrere Prozessoren einer Elektronikvorrichtung speichert, wobei das eine oder die mehreren Programme Anweisungen zum Durchführen eines der Verfahren nach Ansprüchen 1-13 einschließen.

15. Elektronikvorrichtung, einen oder mehrere Prozessoren umfassend und Speicher, der ein oder mehrere Programme für Ausführung durch den einen oder die mehreren Prozessoren speichert, wobei das eine oder die mehreren Programme Anweisungen zum Durchführen eines der Verfahren nach Ansprüchen 1-13 einschließen.

## Revendications

1. Procédé mis en œuvre par ordinateur pour l'interprétation d'une entrée d'utilisateur pour effectuer une tâche sur un dispositif informatique comprenant au moins un processeur, consistant à :
au niveau d'un processeur, détecter si un mode mains libres ou un mode mains sur le dispositif est actif ;
au niveau d'un dispositif de sortie, inviter un utilisateur à saisir une entrée (100) ;
au niveau d'un dispositif d'entrée ; recevoir une entrée d'utilisateur (100) ;
au niveau du processeur, interpréter l'entrée d'utilisateur reçue pour en déduire une représentation de l'intention (200) de l'utilisateur, **caractérisé en ce que** l'interprétation consiste à :
interpréter l'entrée d'utilisateur en tant que texte ;
générer un ensemble d'interprétations candidates possibles du texte ;
analyser les interprétations candidates du texte et générer un ensemble d'interprétations sémantiques possibles à partir des interprétations candidates ;
traiter l'ensemble d'interprétations sémantiques possibles pour obtenir des étapes de tâches ;
déterminer la représentation de l'intention de l'utilisateur à partir de l'ensemble d'interprétations sémantiques sur la base des étapes de tâches obtenues ;
au niveau du processeur, identifier au moins une tâche et au moins un paramètre pour la tâche, sur la base, au moins en partie, de la représentation dérivée de l'intention (300) de l'utilisateur ;
au niveau du processeur, exécuter l'au moins une tâche en faisant appel à l'au moins un paramètre, pour en déduire un résultat (400) ;
au niveau du processeur, en fonction du résultat déduit et en réponse à la détection selon laquelle le dispositif se trouve dans un mode mains libres, générer une réponse de dialogue sur la base du résultat déduit (500) dans un mode de sortie à commande vocale consistant à paraphraser au moins une partie de l'entrée d'utilisateur sous une forme vocale consistant à générer un discours en faisant appel à une pluralité de voix pour différencier l'entrée d'utilisateur paraphrasée de l'autre sortie vocale ; et
au niveau du dispositif de sortie, émettre le discours généré (700) ;
dans lequel, en réponse à la détection selon laquelle le dispositif se trouve dans un mode mains libres (1000), au moins une des étapes parmi l'invitation de l'utilisateur à saisir une entrée, la réception de l'entrée d'utilisateur, l'interprétation de l'entrée d'utilisateur reçue, l'identification de l'au moins une tâche et de l'au moins un paramètre pour la tâche, et la génération de la réponse de dialogue est effectuée d'une manière cohérente avec les limitations associées au mode mains libres par comparaison au mode mains sur le dispositif.

2. Procédé selon la revendication 1, dans lequel au moins deux modes interactifs sont disponibles pour l'interaction de l'utilisateur avec le dispositif informatique, et dans lequel :
en réponse à la détection selon laquelle le dispositif se trouve dans un mode mains libres, au moins une des étapes parmi l'invitation de l'utilisateur à saisir une entrée, la réception de l'entrée d'utilisateur, l'interprétation de l'entrée d'utilisateur reçue, l'identification de l'au moins une tâche et de l'au moins un paramètre pour la tâche, et la génération de la réponse de dialogue est effectuée en faisant appel à un premier mode interactif conçu pour une utilisation à mains libres ; et
en réponse à la détection selon laquelle le dispositif ne se trouve pas dans un mode mains libres, au moins une des étapes parmi l'invitation de l'utilisateur à saisir une entrée, la réception de l'entrée d'utilisateur, l'interprétation de l'entrée d'utilisateur reçue, l'identification de l'au moins une tâche et de l'au moins un paramètre pour la tâche, et la génération de la réponse de dialogue est effectuée en faisant appel à un second mode interactif qui n'est pas conçu pour une utilisation à mains libres.

3. Procédé selon l'une quelconque des revendications 1 à 2, dans lequel détecter si un mode mains libres est actif ou non consiste à détecter une condition choisie dans le groupe constitué par :
une condition indiquant que le dispositif informatique est situé à un emplacement géographique ;
une condition indiquant que l'heure actuelle est située à un moment de la journée ;
une condition indiquant que le dispositif informatique est connecté à un autre dispositif ;
une condition indiquant que le dispositif informatique se déplace à une vitesse supérieure à une vitesse de seuil ;
une condition indiquant que le dispositif se trouve à proximité d'un utilisateur ; et
une condition indiquant la présence d'un mot spécifique dans l'entrée d'utilisateur reçue.

4. Procédé selon l'une quelconque des revendications 1 à 3, dans lequel inviter un utilisateur à saisir une entrée consiste à :
en réponse à la détection selon laquelle le dispositif ne se trouve pas dans un mode mains libres, inviter l'utilisateur par l'intermédiaire d'un premier mode de sortie qui n'est pas conçu pour le mode mains libres ; et
en réponse à la détection selon laquelle le dispositif se trouve dans un mode mains libres, inviter l'utilisateur par l'intermédiaire d'un second mode de sortie qui est conçu pour le mode mains libres.

5. Procédé selon la revendication 4, dans lequel :
inviter l'utilisateur par l'intermédiaire d'un premier mode de sortie consiste à inviter l'utilisateur par l'intermédiaire d'un mode de sortie visuel ; et
inviter l'utilisateur par l'intermédiaire d'un second mode de sortie consiste à inviter l'utilisateur par l'intermédiaire d'un mode de sortie sonore.

6. Procédé selon la revendication 5, dans lequel :
inviter l'utilisateur par l'intermédiaire d'un mode de sortie visuel consiste à afficher une invite sur un écran d'affichage ; et
inviter l'utilisateur par l'intermédiaire d'un mode de sortie sonore consiste à émettre une invite vocale.

7. Procédé selon l'une quelconque des revendications 1 à 6, dans lequel l'interprétation de l'entrée d'utilisateur reçue consiste à :
en réponse à la détection selon laquelle le dispositif se trouve dans un mode mains libres, interpréter l'entrée d'utilisateur reçue en faisant appel à un vocabulaire associé à l'utilisation à mains libres.

8. Procédé selon l'une quelconque des revendications 1 à 7, dans lequel identifier au moins une tâche et au moins un paramètre pour la tâche consiste à, en réponse à la détection selon laquelle le dispositif se trouve dans un contexte à mains libres, effectuer au moins une étape d'identification de flux de tâche associée à l'utilisation à mains libres.

9. Procédé selon la revendication 8, dans lequel effectuer au moins une étape d'identification de flux de tâche associée à l'utilisation à mains libres consiste à inviter l'utilisateur à passer en revue et à confirmer le contenu entré par l'intermédiaire d'une interface à commande vocale.

10. Procédé selon l'une quelconque des revendications 8 à 9, dans lequel effectuer au moins une étape d'identification de flux de tâche associée à l'utilisation à mains libres consiste à effectuer au moins une étape de flux de tâche en faisant appel à la sortie sonore.

11. Procédé selon l'une quelconque des revendications 8 à 10, dans lequel effectuer au moins une étape d'identification de flux de tâche associée à l'utilisation à mains libres consiste à effectuer au moins une étape de flux de tâche choisie dans un groupe limité d'étapes de flux de tâches disponibles appropriées pour le mode à mains libres.

12. Procédé selon l'une quelconque des revendications 1 à 11, dans lequel générer une réponse de dialogue dans un mode de sortie à commande vocale consiste à combiner un modèle de dialogue avec au moins un élément de données personnelles.

13. Procédé selon la revendication 1, dans lequel détecter si un mode mains libres est actif ou non comprend au moins un processus choisi dans le groupe constitué par :
la réception d'une entrée d'utilisateur spécifiant un mode mains libres ;
la réception de données en provenance d'au moins un capteur indiquant une condition environnementale associée à un mode mains libres ;
la détection de la connexion d'un dispositif périphérique associé à un mode mains libres ;
la détection de la déconnexion d'un dispositif périphérique qui n'est pas associé à un mode mains libres ;
la détection d'une communication avec un système embarqué d'un véhicule ;
la détection d'un emplacement actuel ; et
la détection d'une vitesse actuelle.

14. Support de stockage lisible par ordinateur, stockant un ou plusieurs programmes destinés à être exécutés par un ou plusieurs processeurs d'un dispositif électronique, le ou les programmes incluant des instructions pour effectuer l'un quelconque des procédés selon les revendications 1 à 13.

15. Dispositif électronique, comprenant un ou plusieurs processeurs et une mémoire stockant un ou plusieurs programmes destinés à être exécutés par le ou les processeurs, le ou les programmes incluant des instructions pour effectuer l'un quelconque des procédés selon les revendications 1 à 13.
